(19) Europäisches Patentamt / European Patent Office / Office européen des brevets

(11) **EP 3 857 991 B1**

(12) **EUROPEAN PATENT SPECIFICATION**

(45) Date of publication and mention of the grant of the patent:
**30.08.2023 Bulletin 2023/35**

(21) Application number: **19774083.0**

(22) Date of filing: **20.09.2019**

(51) International Patent Classification (IPC):
**H04W 52/14** (2009.01)   **H04W 52/28** (2009.01)
**H04L 5/00** (2006.01)   **H04W 72/12** (2023.01)

(52) Cooperative Patent Classification (CPC):
**H04W 52/146; H04L 5/0058; H04L 5/0094; H04W 52/281;** H04W 52/54

(86) International application number:
**PCT/EP2019/075351**

(87) International publication number:
**WO 2020/064552 (02.04.2020 Gazette 2020/14)**

(54) **UPLINK POWER CONTROL FOR MULTIPLE SERVICES**

UPLINK-LEISTUNGSSTEUERUNG FÜR MEHRERE DIENSTE

COMMANDE DE PUISSANCE DE LIAISON MONTANTE POUR DE MULTIPLES SERVICES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2018 US 201862737998 P**

(43) Date of publication of application:
**04.08.2021 Bulletin 2021/31**

(73) Proprietor: **TELEFONAKTIEBOLAGET LM ERICSSON (PUBL)**
**164 83 Stockholm (SE)**

(72) Inventors:
• **FRÖBERG OLSSON, Jonas**
**590 74 Ljungsbro (SE)**
• **BLANKENSHIP, Yufei**
**Kildeer, Illinois 60047 (US)**
• **KITTICHOKECHAI, Kittipong**
**177 63 Järfälla (SE)**

(74) Representative: **Ericsson**
**Patent Development**
**Torshamnsgatan 21-23**
**164 80 Stockholm (SE)**

(56) References cited:
**WO-A1-2018/171326**

• **CMCC: "Discussion on handling collision issues of UL URLLC and eMBB", 3GPP DRAFT; R1-1806369, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20180521 - 20180525 20 May 2018 (2018-05-20), XP051441574, Retrieved from the Internet: URL:http://www.3gpp.org/ftp/Meetings%5F3GP P%5FSYNC/RAN1/Docs/ [retrieved on 2018-05-20]**
• **HUAWEI ET AL: "PUSCH reliability for URLLC", 3GPP DRAFT; R1-1806902, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20180521 - 20180525 20 May 2018 (2018-05-20), XP051442102, Retrieved from the Internet: URL:http://www.3gpp.org/ftp/Meetings%5F3GP P%5FSYNC/RAN1/Docs/ [retrieved on 2018-05-20]**

- VIVO: "Remaining issues on NR UL power control", 3GPP DRAFT; R1-1801546_REMAINING ISSUES ON NR UL POWER CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 15 February 2018 (2018-02-15), XP051396798, Retrieved from the Internet: URL:http://www.3gpp.org/ftp/tsg%5Fran/WG1%5FRL1/TSGR1%5F92/Docs/ [retrieved on 2018-02-15]
- MOTOROLA MOBILITY ET AL: "Multiplexing of URLLC and eMBB uplink channels", 3GPP DRAFT; R1-1804957 MULTIPLEXING OF URLLC AND EMBB UPLINK CHANNELS V0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Sanya, China; 20180416 - 20180420 15 April 2018 (2018-04-15), XP051427220, Retrieved from the Internet: URL:http://www.3gpp.org/ftp/Meetings%5F3GPP%5FSYNC/RAN1/Docs/ [retrieved on 2018-04-15]
- "3rd Generation Partnership Project; Technical Specification Group Radio Access Network; NR; Physical layer procedures for control (Release 15)", 3GPP STANDARD; TECHNICAL SPECIFICATION; 3GPP TS 38.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V15.2.0, 29 June 2018 (2018-06-29), pages 1-99, XP051474490, [retrieved on 2018-06-29]

**Description**

**TECHNICAL FIELD**

The present invention generally relates to wireless communication networks, and particularly relates to improvements to power control of uplink transmissions.

**BACKGROUND**

Generally, all terms used herein are to be interpreted according to their ordinary meaning in the relevant technical field, unless a different meaning is clearly given and/or is implied from the context in which it is used. All references to a/an/the element, apparatus, component, means, step, *etc.* are to be interpreted openly as referring to at least one instance of the element, apparatus, component, means, step, *etc.,* unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Long Term Evolution (LTE) is an umbrella term for so-called fourth-generation (4G) radio access technologies developed within the Third-Generation Partnership Project (3GPP) and initially standardized in Releases 8 and 9, also known as Evolved UTRAN (E-UTRAN). LTE is targeted at various licensed frequency bands and is accompanied by improvements to non-radio aspects commonly referred to as System Architecture Evolution (SAE), which includes Evolved Packet Core (EPC) network. LTE continues to evolve through subsequent releases that are developed according to standards-setting processes with 3GPP and its working groups (WGs), including the Radio Access Network (RAN) WG, and sub-working groups (*e.g.,* RANI, RAN2, *etc.*).

LTE Release 10 (Rel-10) supports bandwidths larger than 20 MHz. One important requirement on Rel-10 is to assure backward compatibility with LTE Release-8. This should also include spectrum compatibility. As such, a wideband LTE Rel-10 carrier (*e.g.*, wider than 20 MHz) should appear as a number of carriers to an LTE Rel-8 ("legacy") terminal. Each such carrier can be referred to as a Component Carrier (CC). For an efficient use of a wide carrier also for legacy terminals, legacy terminals can be scheduled in all parts of the wideband LTE Rel-10 carrier. One exemplary way to achieve this is by means of Carrier Aggregation (CA), whereby a Rel-10 terminal can receive multiple CCs, each preferably having the same structure as a Rel-8 carrier. Similarly, one of the enhancements in LTE Rel-11 is an enhanced Physical Downlink Control Channel (ePDCCH), which has the goals of increasing capacity and improving spatial reuse of control channel resources, improving inter-cell interference coordination (ICIC), and supporting antenna beamforming and/or transmit diversity for control channel.

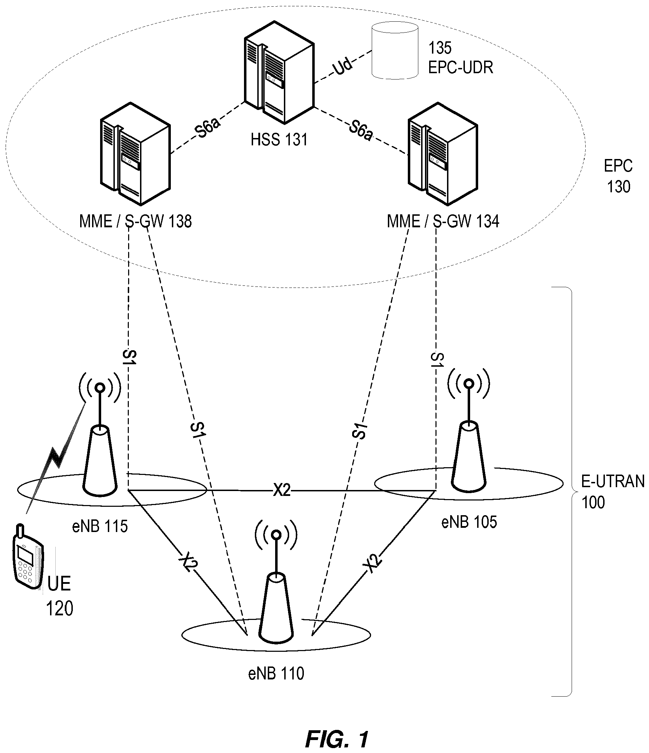

An overall exemplary architecture of a network comprising LTE and SAE is shown in Figure 1. E-UTRAN 120 comprises one or more evolved Node B's (eNB), such as eNBs 125, 130, and 135, and one or more user equipment (UE), such as UE 140. As used within the 3GPP standards, "user equipment" or "UE" means any wireless communication device (*e.g.,* smartphone or computing device) that is capable of communicating with 3GPP-standard-compliant network equipment, including E-UTRAN as well as UTRAN and/or GERAN, as the third- ("3G") and second-generation ("2G") 3GPP radio access networks are commonly known.

As specified by 3GPP, E-UTRAN 120 is responsible for all radio-related functions in the network, including radio bearer control, radio admission control, radio mobility control, scheduling, and dynamic allocation of resources to UEs in uplink (UL) and downlink (DL), as well as security of the communications with the UE. These functions reside in the eNBs, such as eNBs 125, 130, and 135. The eNBs in the E-UTRAN communicate with each other via the X1 interface, as shown in Figure 1. The eNBs also are responsible for the E-UTRAN interface to the EPC 130, specifically the S1 interface to the Mobility Management Entity (MME) and the Serving Gateway (SGW), shown collectively as MME/S-GWs 134 and 138 in Figure 1. Generally speaking, the MME/S-GW handles both the overall control of the UE and data flow between the UE and the rest of the EPC. More specifically, the MME processes the signaling (e.g., control plane) protocols between the UE and the EPC, which are known as the Non-Access Stratum (NAS) protocols. The S-GW handles all Internet Protocol (IP) data packets (e.g., data or user plane) between the UE and the EPC, and serves as the local mobility anchor for the data bearers when the UE moves between eNBs, such as eNBs 125, 130, and 135.

EPC 130 can also include a Home Subscriber Server (HSS) 131, which manages user- and subscriber-related information. HSS 131 can also provide support functions in mobility management, call and session setup, user authentication and access authorization. The functions of HSS 131 can be related to the functions of legacy Home Location Register (HLR) and Authentication Centre (AuC) functions or operations.

In some embodiments, HSS 131 can communicate with a user data repository (UDR) - labelled EPC-UDR 135 in Figure 1 - via a Ud interface. The EPC-UDR 135 can store user credentials after they have been encrypted by AuC algorithms. These algorithms are not standardized (i.e., vendor-specific), such that encrypted credentials stored in EPC-UDR 135 are inaccessible by any other vendor than the vendor of HSS 131.

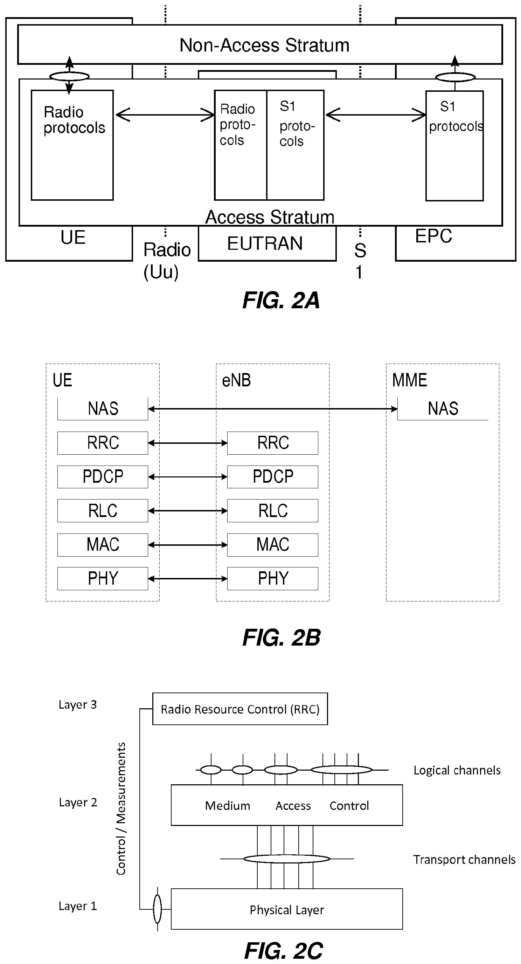

Figure 2A shows a high-level block diagram of an exemplary LTE architecture in terms of its constituent entities - UE, E-UTRAN, and EPC - and high-level functional division into the Access Stratum (AS) and the Non-Access Stratum (NAS). Figure 2A also illustrates two particular interface points, namely Uu (UE/E-UTRAN Radio Interface) and S1 (E-UTRAN/EPC interface), each using a specific set of protocols, *i.e.,* Radio Protocols and S1 Protocols. Each of the two protocols can be further segmented into user plane (UP) and control plane (CP) protocol functionality. On the Uu interface, the UP carries user information (*e.g.*, data packets) while the CP carries control information between UE and E-UTRAN.

Figure 2B illustrates a block diagram of an exemplary CP protocol stack on the Uu interface comprising Physical (PHY), Medium Access Control (MAC), Radio Link Control (RLC), Packet Data Convergence Protocol (PDCP), and Radio Resource Control (RRC) layers. The PHY layer is concerned with how and what characteristics are used to transfer data over transport channels on the LTE radio interface. The MAC layer provides data transfer services on logical channels, maps logical channels to PHY transport channels, and reallocates PHY resources to support these services. The RLC layer provides error detection and/or correction, concatenation, segmentation, and reassembly, reordering of data transferred to or from the upper layers. The PHY, MAC, and RLC layers perform identical functions for both the UP and the CP. The PDCP layer provides ciphering/deciphering and integrity protection for both UP and CP, as well as other functions for the UP such as header compression.

In general, the RRC layer (shown in Figure 2B) controls communications between a UE and an eNB at the radio interface, as well as the mobility of a UE crossing cells. RRC is the highest CP layer in the AS, and also transfers NAS messages from above RRC. Such NAS messages are used to control communications between a UE and the EPC.

Figure 2C shows a block diagram of an exemplary LTE radio interface protocol architecture from the perspective of the PHY. The interfaces between the various layers are provided by Service Access Points (SAPs), indicated by the ovals in Figure 2C. The PHY interfaces with MAC and RRC layers described above. The MAC provides different logical channels to the RLC layer (also described above), characterized by the type of information transferred, whereas the PHY provides a transport channel to the MAC, characterized by how the information is transferred over the radio interface. In providing this transport service, the PHY performs various functions including error detection and correction; rate-matching and mapping of the coded transport channel onto physical channels; power weighting, modulation, and demodulation of physical channels; transmit diversity, beamforming, and multiple input multiple output (MIMO) antenna processing; and sending radio measurements to higher layers (e.g., RRC).

Generally speaking, a physical channel corresponds a set of resource elements carrying information that originates from higher layers. Downlink (*i.e.*, eNB to UE) physical channels provided by the LTE PHY include Physical Downlink Shared Channel (PDSCH), Physical Multicast Channel (PMCH), Physical Downlink Control Channel (PDCCH), Relay Physical Downlink Control Channel (R-PDCCH), Physical Broadcast Channel (PBCH), Physical Control Format Indicator Channel (PCFICH), and Physical Hybrid ARQ Indicator Channel (PHICH). In addition, the LTE PHY DL includes various reference signals, synchronization signals, and discovery signals.

PDSCH is the main physical channel used for unicast DL data transmission, but also for transmission of RAR (random access response), certain system information blocks, and paging information. PBCH carries the basic system information, required by the UE to access the network. PDCCH is used for transmitting DL control information (DCI), mainly scheduling decisions, required for reception of PDSCH, and for UL scheduling grants enabling transmission on PUSCH.

Uplink (*i.e.*, UE to eNB) physical channels provided by the LTE PHY include Physical Uplink Shared Channel (PUSCH), Physical Uplink Control Channel (PUCCH), and Physical Random Access Channel (PRACH). In addition, the LTE PHY UL includes various reference signals including demodulation reference signals (DM-RS), which are transmitted to aid the eNB in the reception of an associated PUCCH or PUSCH; and sounding reference signals (SRS), which are not associated with any UL channel. PUSCH is the UL counterpart to the PDSCH. PUCCH is used by UEs to transmit UL control information, including HARQ acknowledgements, channel state information reports, *etc.* PRACH is used for random access preamble transmission.

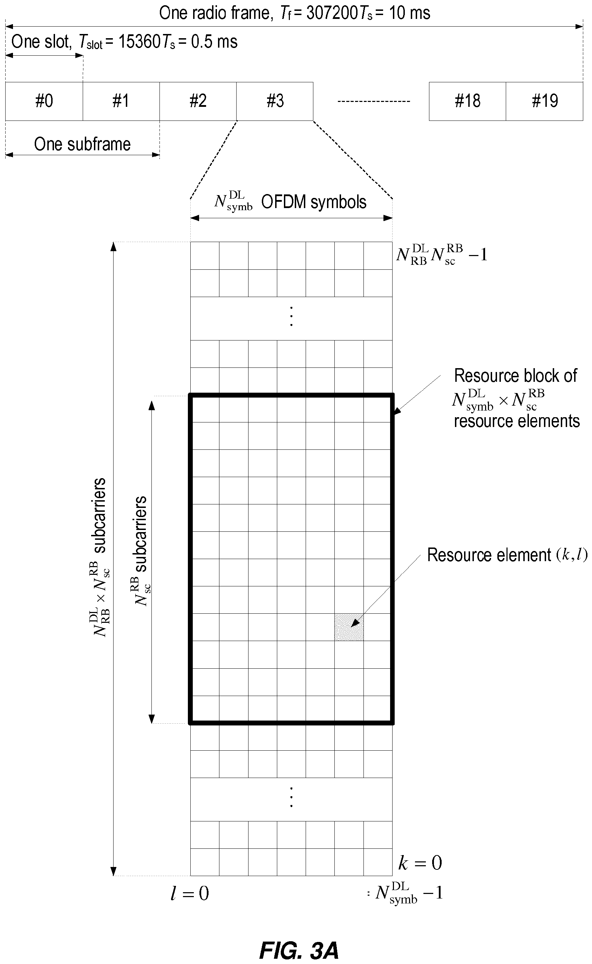

The multiple access scheme for the LTE PHY is based on Orthogonal Frequency Division Multiplexing (OFDM) with a cyclic prefix (CP) in the DL, and on Single-Carrier Frequency Division Multiple Access (SC-FDMA) with a cyclic prefix in the UL. To support transmission in paired and unpaired spectrum, the LTE PHY supports both Frequency Division Duplexing (FDD) (including both full- and half-duplex operation) and Time Division Duplexing (TDD). Figure 3A shows an exemplary radio frame structure ("type 1") used for LTE FDD DL operation. The DL radio frame has a fixed duration of 10 ms and consists of 20 slots, labeled 0 through 19, each with a fixed duration of 0.5 ms. A 1-ms subframe comprises two consecutive slots where subframe $i$ consists of slots $2i$ and $2i+1$. Each exemplary FDD DL slot consists of $N^{DL}_{symb}$ OFDM symbols, each of which is comprised of $N_{sc}$ OFDM subcarriers. Exemplary values of $N^{DL}_{symb}$ can be 7 (with a normal CP) or 6 (with an extended-length CP) for subcarrier spacing (SCS) of 15 kHz. The value of $N_{sc}$ is configurable based upon the available channel bandwidth. Since persons of ordinary skill in the art are familiar with the principles of OFDM, further details are omitted in this description.

As shown in Figure 3A, a combination of a particular subcarrier in a particular symbol is known as a resource element (RE). Each RE is used to transmit a particular number of bits, depending on the type of modulation and/or bit-mapping constellation used for that RE. For example, some REs may carry two bits using QPSK modulation, while other REs may carry four or six bits using 16- or 64-QAM, respectively. The radio resources of the LTE PHY are also defined in terms of physical resource blocks (PRBs). A PRB spans $N^{RB}_{sc}$ sub-carriers over the duration of a slot (*i.e.,* $N^{DL}_{symb}$ symbols), where $N^{RB}_{sc}$ is typically either 12 (with a 15-kHz sub-carrier bandwidth) or 24 (7.5-kHz bandwidth). A PRB spanning the same $N^{RB}_{sc}$ subcarriers during an entire subframe (*i.e.,* $2N^{DL}_{symb}$ symbols) is known as a PRB pair. Accordingly, the resources available in a subframe of the LTE PHY DL comprise $N^{DL}_{RB}$ PRB pairs, each of which comprises $2N^{DL}_{symb} \cdot N^{RB}_{sc}$ REs. For a normal CP and 15-KHz SCS, a PRB pair comprises 168 REs.

One exemplary characteristic of PRBs is that consecutively numbered PRBs (*e.g.,* $PRB_i$ and $PRB_{i+1}$) comprise consecutive blocks of subcarriers. For example, with a normal CP and 15-KHz sub-carrier bandwidth, $PRB_0$ comprises sub-carrier 0 through 11 while $PRB_1$ comprises sub-carriers 12 through 23. The LTE PHY resource also can be defined in terms of virtual resource blocks (VRBs), which are the same size as PRBs but may be of either a localized or a distributed type. Localized VRBs can be mapped directly to PRBs such that VRB $n_{VRB}$ corresponds to PRB $n_{PRB} = n_{VRB}$. On the other hand, distributed VRBs may be mapped to non-consecutive PRBs according to various rules, as described in 3GPP Technical Specification (TS) 36.213 or otherwise known to persons of ordinary skill in the art. However, the term "PRB" shall be used in this disclosure to refer to both physical and virtual resource blocks. Moreover, the term "PRB" will be used henceforth to refer to a resource block for the duration of a subframe, *i.e.*, a PRB pair, unless otherwise specified.

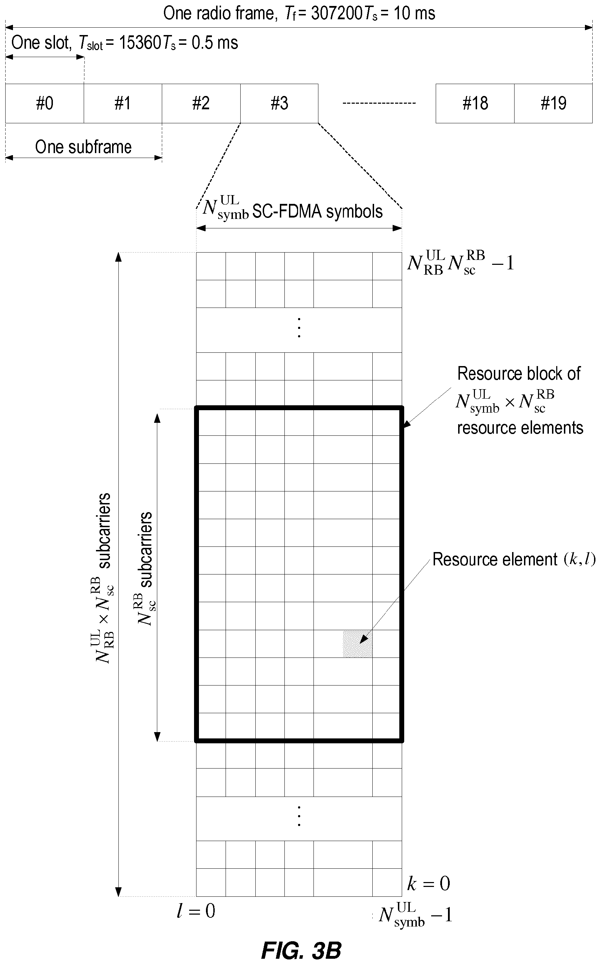

Figure 3B shows an exemplary LTE FDD uplink (UL) radio frame configured in a similar manner as the exemplary FDD DL radio frame shown in Figure 3A. Using terminology consistent with the above DL description, each UL slot consists of $N^{UL}_{symb}$ OFDM symbols, each of which is comprised of $N_{sc}$ OFDM subcarriers.

As discussed above, the LTE PHY maps the various DL and UL physical channels to the resources shown in Figures 3A and 3B, respectively. For example, the PHICH carries HARQ feedback (*e.g.,* ACK/NAK) for UL transmissions by the UEs. Similarly, PDCCH carries scheduling assignments, channel quality feedback (*e.g.,* CSI) for the UL channel, and other control information. Likewise, a PUCCH carries uplink control information such as scheduling requests, CSI for the downlink channel, HARQ feedback for eNB DL transmissions, and other control information. Both PDCCH and PUCCH can be transmitted on aggregations of one or several consecutive control channel elements (CCEs), and a CCE is mapped to the physical resource based on resource element groups (REGs), each of which is comprised of a plurality of REs. For example, a CCE can comprise nine (9) REGs, each of which can comprise four (4) REs.

In LTE, DL transmissions are dynamically scheduled, *i.e.,* in each subframe the base station transmits control information indicating the terminal to which data is transmitted and upon which resource blocks the data is transmitted, in the current downlink subframe. This control signaling is typically transmitted in the first *n* OFDM symbols in each subframe and the number *n* (=1,2,3 or 4) is known as the Control Format Indicator (CFI) indicated by the PCFICH transmitted in the first symbol of the control region.

While LTE was primarily designed for user-to-user communications, 5G (also referred to as "NR") cellular networks are envisioned to support both high single-user data rates (*e.g.,* 1 Gb/s) and large-scale, machine-to-machine communication involving short, bursty transmissions from many different devices that share the frequency bandwidth. The 5G radio standards (also referred to as "New Radio" or "NR") are currently targeting a wide range of data services including eMBB (enhanced Mobile Broad Band), URLLC (Ultra-Reliable Low Latency Communication), and Machine-Type Communications (MTC). These services can have different requirements and objectives.

For example, URLLC is intended to provide a data service with extremely strict error and latency requirements, *e.g.*, error probabilities as low as $10^{-5}$ or lower and 1 ms end-to-end latency or lower. However, the peak data rate requirements are moderate. For eMBB, the latency and error probability requirements can be less stringent than URLLC, whereas the required peak rate and/or spectral efficiency can be higher than URLLC. In addition, NR is targeted to support deployment in lower-frequency spectrum similar to LTE, and in very-high-frequency spectrum (referred to as "millimeter wave" or "mmW").

Furthermore, it is possible that an NR UE can run multiple concurrent data services having different performance requirements, such as eMBB and URLLC. In these scenarios, various issues, problems, and/or difficulties can arise with respect to controlling the UE's transmit power in a manner that the UE can meet the different performance requirements.

Controlling the transmit power of UEs in for URLLC and eMBB data is described in 3GPP contribution "Discussion on handling collision issues of UL URLLC and eMBB", document R1-1806369, 3GPP TSG RAN WG1 Meeting #93, Busan, Korea (May 21-25, 2018). WO2018/171326 A1 describes transmit power control for scheduled transmissions on a PUSCH. Details of transmit power control mechanisms for NR are for example specified in 3GPP TS 38.213 V15.2.0 (2018-06). Aspects of UL power control in NR are also addressed in 3GPP contribution "Remaining issues on NR UL power control", document R1-1801546, 3GPP TSG RAN WG1 Meeting #92, Athens, Greece (February 26 - March 2, 2018). Aspects of PUSCH reliability for URLLC are discussed in "Controlling the transmit power of UEs in for URLLC and eMBB data is described in 3GPP contribution "PUSCH reliability for URLLC", document R1-1806902, 3GPP TSG RAN WG1 Meeting #93, Busan, Korea (May 21-25, 2018). Aspects of multiplexing URLLC and eMBB services are discussed in 3GPP contribution "Multiplexing of URLLC and eMBB uplink channels", document R1-1804957, 3GPP TSG RAN WG1 Meeting #92bis, Sanya, China (April 16 - 20, 2018).

**SUMMARY**

The present disclosure provides a method according to claim 1, a method according to claim 8, a network node according to claim 15, a computer program product according to claim 17, a user equipment (UE) according to claim 18, and a computer program product according to claim 20. The dependent claims define further embodiments. Embodiments of the present disclosure provide specific improvements to communication between user equipment (UE) and network nodes in a wireless communication network, such as by facilitating solutions to overcome the exemplary problems described above.

Some embodiments of the present disclosure include methods and/or procedures for power control of uplink (UL) transmissions, from a user equipment (UE), that are associated with a plurality of data services having different performance requirements. These exemplary methods and/or procedure scan be performed by a network node (*e.g.*, base station, eNB, gNB, *etc.,* or component thereof) in communication with a UE (*e.g.*, wireless device, IoT device, modem, *etc.* or component thereof).

The exemplary methods and/or procedures can include configuring the UE with a plurality of resources that can be allocated for UL transmissions based on one or more transmit power control (TPC) parameter. The plurality of resources can include first resources associated with first parameter values for the respective TPC parameters, and second resources associated with second parameter values for the respective TPC parameters. The first parameter values provide increased UL transmission reliability relative to the second parameter values.

The exemplary method and/or procedure can also include transmitting, to the UE, a downlink (DL) control message comprising an indication that the first resources or the second resources are allocated for an UL transmission associated with a data service, and an indication of the first parameter values or the second parameter values to be used for power control of the UL transmission. In some embodiments, the indication that the first resources or the second resources are allocated for the UL transmission also indicates the first parameter values or the second parameter values to be used for power control of the UL transmission.

In some embodiments, the exemplary method and/or procedure can also include selecting the first resources or the second resources to allocate to the UE for the UL transmission, based on a reliability requirement associated with the data service.

In some embodiments, the exemplary method and/or procedure can also include receiving the UL transmission, from the UE, in accordance with the indications sent in the DL control message (e.g., in the resources indicated as allocated and at a power level based on the indication of the first parameter values or the second parameter values).

In some embodiments, the UL transmission is associated with an ultra-reliable low-latency communication (URLLC) service, and the DL control message indicates that the UE should use the first parameter values. In other embodiments, the UL transmission is associated with an enhanced mobile broadband (eMBB) service, and the DL control message indicates that the UE should use the second parameter values.

In some embodiments, the UL transmission associated with the data service is on a physical uplink control channel (PUCCH) or a physical uplink shared channel (PUSCH). In some embodiments, the UL transmission associated with the data service includes a scheduling request (SR) and/or a hybrid-ARQ acknowledgement (HARQ-ACK).

In various embodiments, the one or more TPC parameters can include a transmit power correction, a nominal power level, and/or a closed-loop power control adjustment state. In some embodiments, the first parameter values comprise mappings of a plurality of TPC command values to respective first transmit power correction values, and the second parameter values comprise mappings of the plurality of TPC command values to respective second transmit power correction values. In some embodiments, the DL control message also includes a TPC command having one of the plurality of TPC command values (e.g., mapped to one of the first and one of the second transmit power correction values).

In some embodiments, the first and second parameters comprise respective identifiers of first and second nominal power levels. In some embodiments, the first and second parameters comprise respective identifiers of first and second closed-loop power control adjustment states.

Other embodiments include methods and/or procedures for power control of UL transmissions to a network node in a RAN, the UL transmissions being associated with a plurality of data services having different performance requirements. These exemplary methods and/or procedures can be performed by a user equipment (*e.g.*, UE, wireless device, IoT device, modem, *etc.* or component thereof) in communication with the network node *(e.g.,* base station, eNB, gNB, *etc.,* or components thereof).

The exemplary methods and/or procedures can include receiving, from the network node, a configuration of a plurality of resources that can be allocated for UL transmissions based on one or more TPC parameters. The plurality of resources can include first resources associated with first parameter values for the respective TPC parameters, and second resources associated with second parameter values for the respective TPC parameters. The first parameter values provide increased UL transmission reliability relative to the second parameter values.

The exemplary methods and/or procedures can also include receiving, from the network node, a DL control message comprising an indication that the first resources or the second resources are allocated for an UL transmission associated with a data service, and an indication of the first parameter values or the second parameter values to be used for power control of the UL transmission. In some embodiments, the indication that the first resources or the second resources are allocated for the UL transmission also indicates the first parameter values or the second parameter values to be used for power control of the UL transmission.

In some embodiments, the exemplary methods and/or procedures can also include determining a transmit power for the UL transmission based on the first parameter values or second parameter values indicated by the DL control message, and performing the UL transmission according to the determined transmit power and by using the first resources or the second resources, as indicated by the DL control message.

In some embodiments, the UL transmission is associated with a URLLC service, and the DL control message indicates that the UE should use the first parameter values. In other embodiments, the UL transmission is associated with an eMBB service, and the DL control message indicates that the UE should use the second parameter values.

In some embodiments, the UL transmission associated with the data service is on a PUCCH or a PUSCH. In some embodiments, the UL transmission associated with the data service includes a scheduling request (SR) and/or a hybrid-ARQ acknowledgement (HARQ-ACK).

In various embodiments, the one or more TPC parameters can include a transmit power correction, a nominal power level, and/or a closed-loop power control adjustment state. In some embodiments, the first parameter values comprise mappings of a plurality of TPC command values to respective first transmit power correction values, and the second parameter values comprise mappings of the plurality of TPC command values to respective second transmit power correction values. In some embodiments, the DL control message also includes a TPC command having one of the plurality of TPC command values (e.g., mapped to one of the first and one of the second transmit power correction values).

In some embodiments, the first and second parameters comprise respective identifiers of first and second nominal power levels. In some embodiments, the first and second parameters comprise respective identifiers of first and second closed-loop power control adjustment states.

Other embodiments include network nodes (*e.g.,* base stations, eNBs, gNBs, *etc.* or components thereof) or user equipment (UEs, *e.g.*, wireless devices, IoT devices, or components thereof) configured to perform operations corresponding to any of the exemplary methods and/or procedures described herein. Other embodiments include non-transitory, computer-readable media storing program instructions that, when executed by at least one processor, configure such network nodes or UEs to perform operations corresponding to any of the exemplary methods and/or procedures described herein.

These and other objects, features and advantages of the embodiments of the present disclosure will become apparent upon reading the following Detailed Description in view of the Drawings briefly described below.

## BRIEF DESCRIPTION OF THE DRAWINGS

Figure 1 is a high-level block diagram of an exemplary architecture of the Long-Term Evolution (LTE) Evolved UTRAN (E-UTRAN) and Evolved Packet Core (EPC) network, as standardized by 3GPP.

Figure 2A is a high-level block diagram of an exemplary E-UTRAN architecture in terms of its constituent components, protocols, and interfaces.

Figure 2B is a block diagram of exemplary protocol layers of the control-plane portion of the radio (Uu) interface between a user equipment (UE) and the E-UTRAN.

Figure 2C is a block diagram of an exemplary LTE radio interface protocol architecture from the perspective of the PHY layer.

Figures 3A and 3B are block diagrams, respectively, of exemplary downlink and uplink LTE radio frame structures used for frequency division duplexing (FDD) operation;

Figure 4 shows an exemplary 5G network architecture.

Figures 5-6 show two exemplary 5G New Radio (NR) timeslot configurations.

Figures 7-8 show various exemplary ASN.1 data structures defining information elements (IEs) used for radio resource control (RRC) configuration of NR UEs, as defined in 3GPP TS 38.331.

Figure 9 shows an exemplary ASN.1 data structure for a *PUCCH-Resource* IE, according to various exemplary embodiments of the present disclosure.

Figure 10 shows an exemplary ASN.1 data structure for a *SchedulingRequestResourceConfig* IE, according to various exemplary embodiments of the present disclosure.

Figure 11 shows an exemplary ASN.1 data structure for an enhanced *PUCCH-formatX* IE (where X = 0...4), according to various exemplary embodiments of the present disclosure.

Figure 12 shows an exemplary ASN.1 data structure for an enhanced *PUCCH-PowerControl* IE, according to various exemplary embodiments of the present disclosure.

Figure 13 shows a flow diagram of an exemplary method and/or procedure performed by a user equipment (LTE, e.g., wireless device, or component thereof), according to various exemplary embodiments of the present disclosure.

Figure 14 shows a flow diagram of an exemplary method and/or procedure performed by a network node (*e.g.,* base station, gNB, eNB, *etc.* or component thereof), according to various exemplary embodiments of the present disclosure.

Figure 15 is a block diagram of an exemplary wireless device or UE according to various exemplary embodiments of the present disclosure.

Figure 16 is a block diagram of an exemplary network node according to various exemplary embodiments of the present disclosure.

Figure 17 is a block diagram of an exemplary network configured to provide over-the-top (OTT) data services between a host computer and a UE, according to various exemplary embodiments of the present disclosure.

## DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. Furthermore, the following terms are used throughout the description given below:

- **Radio Node:** As used herein, a "radio node" can be either a "radio access node" or a "wireless device."
- **Radio Access Node:** As used herein, a "radio access node" (or "radio network node") can be any node in a radio access network (RAN) of a cellular communications network that operates to wirelessly transmit and/or receive signals. Some examples of a radio access node include, but are not limited to, a base station (*e.g.,* a New Radio (NR) base station (gNB) in a 3GPP Fifth Generation (5G) NR network or an enhanced or evolved Node B (eNB) in a 3GPP LTE network), a high-power or macro base station, a low-power base station (*e.g.,* a micro base station, a pico base station, a home eNB, or the like), and a relay node.
- **Core Network Node:** As used herein, a "core network node" is any type of node in a core network. Some examples of a core network node include, *e.g.,* a Mobility Management Entity (MME), a Packet Data Network Gateway (P-GW), a Service Capability Exposure Function (SCEF), or the like.
- **Wireless Device:** As used herein, a "wireless device" (or "WD" for short) is any type of device that has access to (*i.e.,* is served by) a cellular communications network by communicate wirelessly with network nodes and/or other wireless devices. Unless otherwise noted, the term "wireless device" is used interchangeably herein with "user equipment" (or "UE" for short). Some examples of a wireless device include, but are not limited to, a UE in a 3GPP network and a Machine Type Communication (MTC) device. Communicating wirelessly can involve transmitting and/or receiving wireless signals using electromagnetic waves, radio waves, infrared waves, and/or other types of signals suitable for conveying information through air.
- **Network Node:** As used herein, a "network node" is any node that is either part of the radio access network or the core network of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g.*, administration) in the cellular communications network.

Note that the description given herein focuses on a 3GPP cellular communications system and, as such, 3GPP terminology or terminology similar to 3GPP terminology is oftentimes used. However, the concepts disclosed herein are not limited to a 3GPP system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from the concepts, principles, and/or embodiments described herein.

In addition, functions and/or operations described herein as being performed by a wireless device or a network node may be distributed over a plurality of wireless devices and/or network nodes. Furthermore, although the term "cell" is used herein, it should be understood that (particularly with respect to 5G NR) beams may be used instead of cells and, as such, concepts described herein apply equally to both cells and beams.

As briefly mentioned above, it is possible that an NR UE can run multiple concurrent data services having different performance requirements, such as eMBB and URLLC. In these scenarios, various issues, problems, and/or difficulties can arise with respect to controlling the UE's transmit power in a manner that the UE can meet the different performance requirements. This is discussed in more detail below.

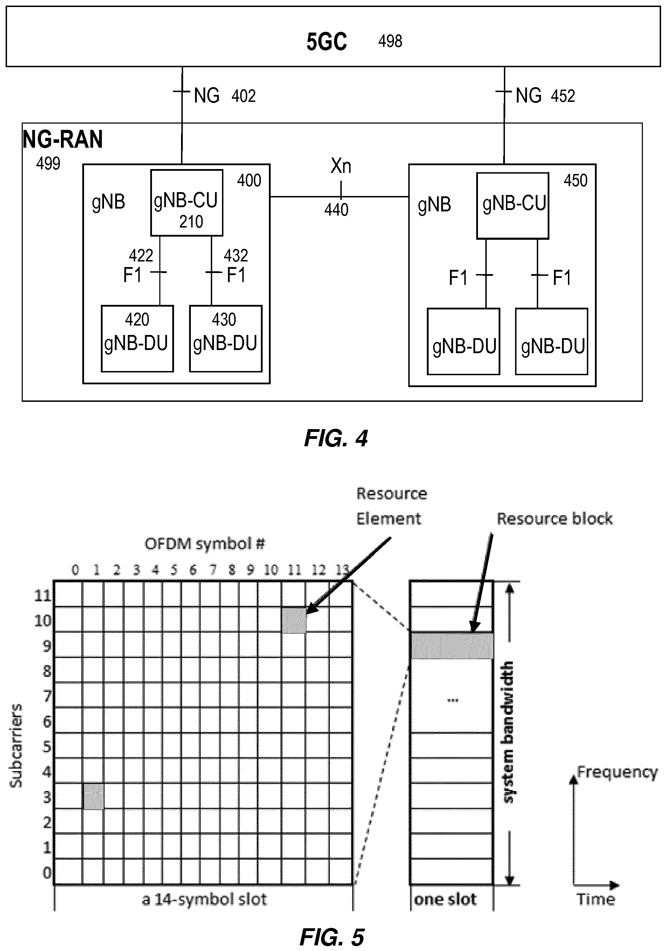

Figure 4 illustrates a high-level view of an exemplary 5G network architecture, including a Next Generation RAN (NG-RAN) 499 and a 5G Core (5GC) 498. NG-RAN 499 can include one or more gNodeB's (gNBs) connected to the 5GC via one or more NG interfaces, such as gNBs 400, 450 connected via interfaces 402, 452, respectively. More specifically, gNBs 400, 450 can be connected to one or more Access and Mobility Management Functions (AMF) in the 5GC 498 via respective NG-C interfaces. Similarly, gNBs 400, 450 can be connected to one or more User Plane Functions (UPFs) in 5GC 498 via respective NG-U interfaces.

Although not shown, in some deployments 5GC 498 can be replaced by an Evolved Packet Core (EPC), which conventionally has been used together with LTE E-UTRAN. In such deployments, gNBs 400, 450 can connect to one or more Mobility Management Entities (MMEs) in EPC 498 via respective S1-C interfaces. Similarly, gNBs 400, 450 can connect to one or more Serving Gateways (SGWs) in EPC via respective NG-U interfaces.

In addition, the gNBs can be connected to each other via one or more Xn interfaces, such as Xn interface 440 between gNBs 400 and 450. The radio technology for the NG-RAN is often referred to as "New Radio" (NR). With respect to the NR interface to UEs, each of the gNBs can support frequency division duplexing (FDD), time division duplexing (TDD), or a combination thereof.

NG-RAN 499 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region" which is defined in 3GPP TS 23.501. If security protection for CP and UP data on TNL of NG-RAN interfaces is supported, NDS/IP (3GPP TS 33.401) shall be applied.

The NG RAN logical nodes shown in Figure 4 (and described in 3GPP TS 38.401 and 3GPP TR 38.801) include a Central Unit (CU or gNB-CU) and one or more Distributed Units (DU or gNB-DU). For example, gNB 400 includes gNB-CU 410 and gNB-DUs 420 and 430. CUs (e.g., gNB-CU 410) are logical nodes that host higher-layer protocols and perform various gNB functions such controlling the operation of DUs. A DU (e.g., gNB-DUs 420, 430) is a decentralized logical node that hosts lower layer protocols and can include, depending on the functional split option, various subsets of the gNB functions. As such, each of the CUs and DUs can include various circuitry needed to perform their respective functions, including processing circuitry, transceiver circuitry (e.g., for communication), and power supply circuitry. Moreover, the terms "central unit" and "centralized unit" are used interchangeably herein, as are the terms "distributed unit" and "decentralized unit."

A gNB-CU connects to one or more gNB-DUs over respective F1 logical interfaces, such as interfaces 422 and 432 shown in Figure 4. However, a gNB-DU can be connected to only a single gNB-CU. The gNB-CU and connected gNB-DU(s) are only visible to other gNBs and the 5GC as a gNB. In other words, the F1 interface is not visible beyond gNB-CU. Furthermore, the F1 interface between the gNB-CU and gNB-DU is specified and/or based on the following general principles:

- F1 is an open interface;
- F1 supports the exchange of signaling information between respective endpoints, as well as data transmission to the respective endpoints;
- from a logical standpoint, F1 is a point-to-point interface between the endpoints (even in the absence of a physical direct connection between the endpoints);
- F1 supports control plane (CP) and user plane (UP) separation, such that a gNB-CU may be separated in CP and UP;
- F1 separates Radio Network Layer (RNL) and Transport Network Layer (TNL);
- F1 enables exchange of UE- and non-UE-associated information;
- F1 is defined to be future proof with respect to new requirements, services, and functions;
- A gNB terminates X2, Xn, NG and S1-U interfaces and, for the F1 interface between DU and CU, utilizes the F1 application part protocol (F1-AP) which is defined in 3GPP TS 38.473.

Furthermore, a CU can host protocols such as RRC and PDCP, while a DU can host protocols such as RLC, MAC and PHY. Other variants of protocol distributions between CU and DU can exist, however, such as hosting the RRC, PDCP and part of the RLC protocol in the CU (*e.g.*, Automatic Retransmission Request (ARQ) function), while hosting the remaining parts of the RLC protocol in the DU, together with MAC and PHY. In some exemplary embodiments, the CU can host RRC and PDCP, where PDCP is assumed to handle both UP traffic and CP traffic. Nevertheless, other exemplary embodiments may utilize other protocol splits that by hosting certain protocols in the CU and certain others in the DU. Exemplary embodiments can also locate centralized CP protocols (*e.g.*, PDCP-C and RRC) in a different CU with respect to the centralized UP protocols (*e.g.*, PDCP-U).

It has also been agreed in 3GPP to support a separation of gNB-CU into a CU-CP function (including RRC and PDCP for signaling radio bearers) and CU-UP function (including PDCP for user plane). The CU-CP and CU-UP functions can communicate with each other using the E1-AP protocol over the E1 interface. In addition to the new E1 interface, the F1 interface can be logically separated into CP (F1-C) and UP (F1-U) functionalities. The following scenarios for the split CU-UP/CP are defined in 3GPP TR 38.804:

- CU-CP and CU-UP centralized;
- CU-CP distributed and CU-UP centralized; and
- CU-CP centralized and CU-UP distributed.

Similar to LTE, the NR PHY uses CP-OFDM (Cyclic Prefix Orthogonal Frequency Division Multiplexing) in the DL and both CP-OFDM and DFT-spread OFDM (DFT-S-OFDM) in the UL. In the time domain, NR DL and UL physical resources are organized into equal-sized, 1-ms subframes. Each subframe includes of one or more slots, and each slot includes 14 (for normal cyclic prefix) or 12 (for extended cyclic prefix) time-domain symbols.

Figure 5 shows an exemplary time-frequency resource grid for an NR slot. As illustrated in Figure 5, a resource block (RB) consists of 12 contiguous, or consecutive, subcarriers in the frequency domain. In this example, the RB spans 14 symbols in the time domain for a duration of a 14-symbol slot, but in other examples may span a different number of symbols. Like in LTE, a resource element (RE) consists of one subcarrier in the frequency domain and one symbol in the time domain. Common RBs (CRBs) are numbered from 0 to the end of the system bandwidth.

Each carrier bandwidth part (BWP) configured for a UE has a common reference of CRB 0, such that a particular configured BWP may start at a CRB greater than zero. In Rel-15 NR, a UE can be configured with up to four DL BWPs with a single DL BWP being active at any given time. A UE can also be configured with up to four UL BWPs with a single UL BWP being active at any given time. For example, a UE can be configured with a narrow BWP (e.g., 12 MHz) and a wide BWP (e.g., 120 MHz), each starting at a particular CRB, but only one can be active for the UE at any given time.

Within a BWP, RBs are defined and numbered in the frequency domain from 0 to $N_{\mathrm{BWP},i}^{\mathrm{size}}-1$, where *i* is the index of the particular carrier BWP. Similar to LTE, each NR resource element (RE) corresponds to one OFDM subcarrier during one OFDM symbol interval. Various subcarrier spacing (SCS) values (referred to as numerologies) are supported in NR and are given by $\Delta f = (15 \times 2^{\mu})$ *kHz* where $\mu \in (0,1,2,3,4)$ denotes the numerology value. $\Delta f = 15kHz$ is the basic (or reference) subcarrier spacing that is also used in LTE. The slot length is inversely related to subcarrier spacing or numerology according to $1/2^{\mu}$ ms. For example, there is one (1-ms) slot per subframe for $\Delta f = 15kHz$ ($\mu = 0$), two 0.5-ms slots per subframe for $\Delta f = 30kHz$ ($\mu=1$), etc. In addition, the RB bandwidth is directly related to numerology according to $2^{\mu} * 180kHz$.

Table 1 below summarizes the supported NR transmission numerologies $\mu$ and associated parameters. A UE's DL and UL numerologies can be configured independently by the network, subject to UE support.

Table 1.

| $\mu$ | $\Delta f = 2^{\mu} \cdot 15$ [kHz] | Cyclic prefix | Slot length | RB BW (MHz) |
|---|---|---|---|---|
| 0 | 15 | Normal | 1 ms | 0.18 |
| 1 | 30 | Normal | 0.5 ms | 0.36 |
| 2 | 60 | Normal, Extended | 0.25 ms | 0.112 |
| 3 | 120 | Normal | 125 $\mu$s | 1.44 |
| 4 | 240 | Normal | 62.5 $\mu$s | 2.88 |

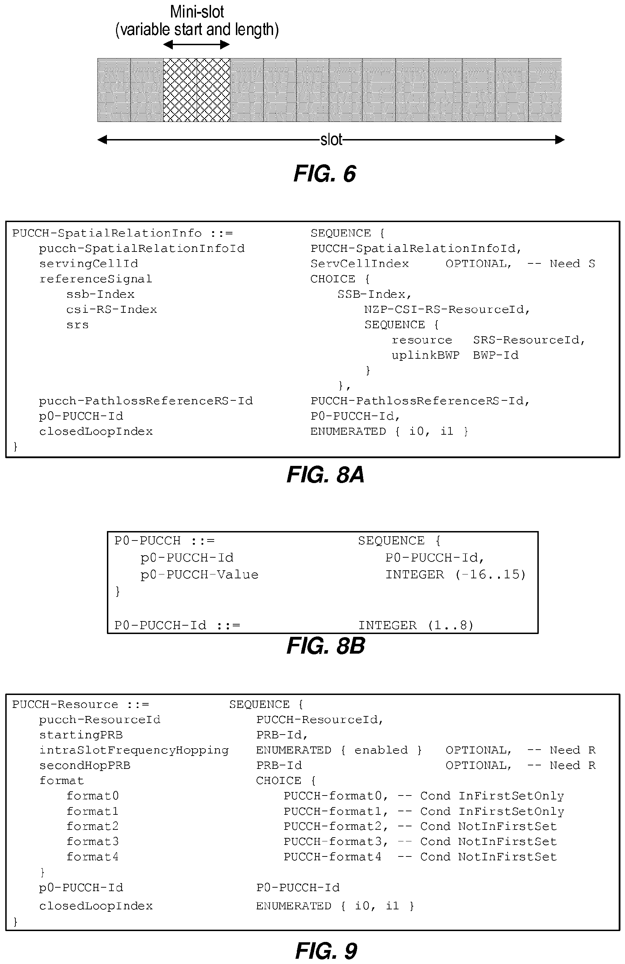

In addition, NR includes a Type-B scheduling, also known as "mini-slots." These are shorter than slots, typically ranging from one symbol up to one less than the number of symbols in a slot (e.g., 11 or 13), and can start at any symbol of a slot. Mini-slots can be used if the transmission duration of a slot is too long and/or the occurrence of the next slot start (slot alignment) is too late. Applications of mini-slots include unlicensed spectrum and latency-critical transmission (e.g., URLLC). However, mini-slots are not service-specific and can also be used for eMBB or other services. Figure 6 shows an exemplary mini-slot arrangement within an NR slot.

Similar to LTE, NR data scheduling is done on a per-slot basis. In each slot, the base station (e.g., gNB) transmits DL control information (DCI) over PDCCH that indicates which UE is scheduled to receive data in that slot, which RBs will carry that data. A UE first detects and decodes DCI and, if successful, then decodes the corresponding PDSCH based on the decoded DCI. Likewise, DCI can include UL grants that indicate which UE is scheduled to transmit data in that slot, which RBs will carry that data. A UE first detects and decodes an UL grant from PDCCH and, if successful, then transmits the corresponding PUSCH on the resources indicated by the grant. DCI formats 0_0 and 0_1 are used to convey UL grants for PUSCH, while DCI formats 1_0 and 1_1 are used to convey PDSCH scheduling. Other DCI formats (2_0, 2_1, 2_2 and 2_3) are used for other purposes including transmission of slot format information, reserved resource, transmit power control information, *etc.*

A DCI includes a payload complemented with a Cyclic Redundancy Check (CRC) of the payload data. Since DCI is sent on PDCCH that is received by multiple terminals, an identifier of the targeted UE needs to be included. In NR, this is done by scrambling the CRC with a Radio Network Temporary Identifier (RNTI) assigned to the UE. Most commonly, the cell RNTI (C-RNTI) assigned to the targeted UE by the serving cell is used for this purpose.

The DCI payload together with the identifier-scrambled CRC is encoded and transmitted on the PDCCH. Each UE tries to detect a PDCCH with multiple hypothesis with respect to payload size and location in the time-frequency resource grid based on its configured search spaces. Once a UE decodes a DCI it de-scrambles the CRC with RNTI(s) that is(are) assigned to it and/or associated with the particular PDCCH search space. In case of a match, the UE considers the detected DCI addressed to itself and follows the instructions (e.g., scheduling information) contained in the DCI.

Within an NR slot, the PDCCH channels are confined to a particular number of symbols and a particular number of subcarriers, where this region is referred to as the control resource set (CORESET). A CORESET is made up of multiple RBs (i.e., multiples of 14 REs) in the frequency domain and either one, two, or three OFDM symbols in the time domain, as further defined in 3GPP TS 38.213 § 11.3.2.2. A CORESET is functionally similar to the control region in an LTE subframe. Like in LTE, the CORESET time domain size can be indicated by PCFICH. In LTE, the frequency bandwidth of the control region is fixed (i.e., to the total system bandwidth), whereas in NR, the frequency bandwidth of the CORESET is variable. CORESET resources can be indicated to a UE by RRC signaling.

In general, a UE determines its RB assignment in frequency domain for PUSCH or PDSCH using the resource allocation field in the detected DCI carried in PDCCH. In NR, two frequency resource allocation types - 0 and 1 - are supported for PUSCH and PDSCH. The RB indexing for resource allocation is determined within the UE's active BWP. Upon detection of PDCCH addressed to it, a UE first determines the assigned UL or DL BWP and then determines the resource allocation within the assigned BWP based on RB indexing for that BWP.

Similarly, in NR, UCI (Uplink Control Information) is transmitted by UEs on PUCCH. For example, UCI can include HARQ (Hybrid Automatic Repeat Request) feedback, CSI (Channel State Information), and SR (Scheduling Request). Currently there are five different PUCCH formats (0-4) defined for carrying different types of UCI, where the sizes of the various formats range from one to 14 OFDM symbols. The various PUCCH formats are further defined in 3GPP TS 38.211.

As mentioned above, URLLC is intended to provide a data service with extremely strict error (or reliability) and latency requirements, *e.g.*, error probabilities less than $10^{-5}$ (*e.g.*, 99.999% reliability) and maximum 1-ms end-to-end latency. For a UE running mixed services with both eMBB and URLLC, the reliability requirements on UCI transmitted on PUCCH can differ significantly depending on what service the UCI relates. For example, a NACK transmission must be more reliable if the NACK relates to URLLC than if it relates to eMBB. This is because a NACK that is received as ACK will result in a lost packet for URLLC, since there is no time to perform RLC re-transmissions under the strict latency requirements. In contrast, without the strict latency requirements, RLC re-transmissions can be performed for lost eMBB packets without severe impact on performance.

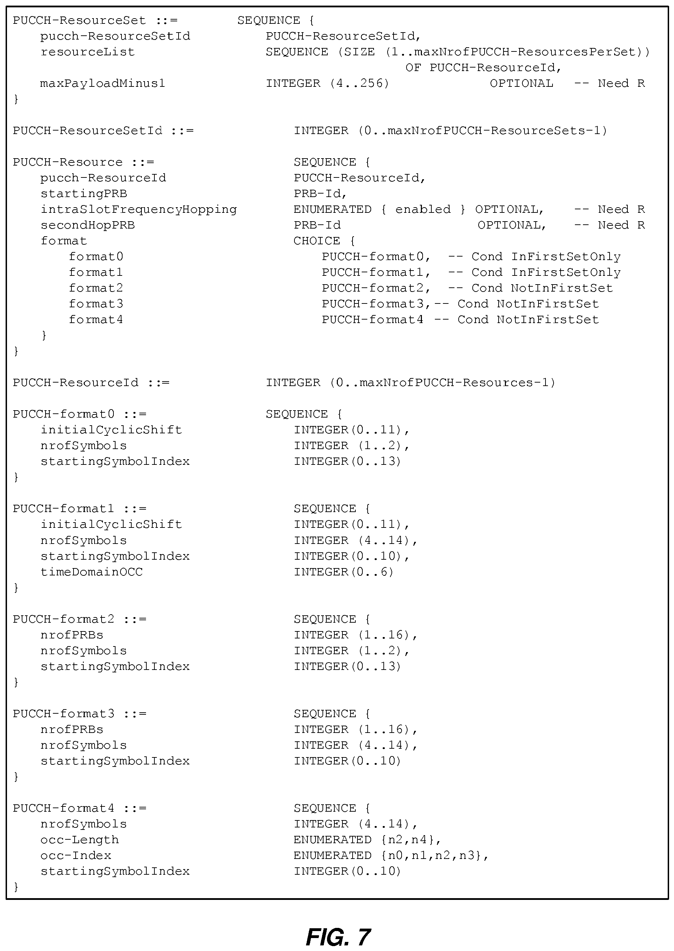

In NR Rel-15, certain downlink DCI formats (*e.g.*, formats 1_0 and 1_1, as defined in 3GPP TS 38.212) include a "PUCCH resource indicator" field, which points to a PUCCH resource entry in a *PUCCH-ResourceSet* configured by RRC. Figure 7 shows an exemplary ASN.1 data structure for a *PUCCH-ResourceSet* information element (IE) used for RRC configuration, as defined in 3GPP TS 38.331. As illustrated by Figure 7, each *PUCCH-Resource* is associated with a *PUCCH ResourceId* and a *format* selected from the five available PUCCH formats, *i.e.*, *PUCCH-formatX,* where X = 0...4. *PUCCH-Resource* defines a starting PRB for a PUCCH transmission, while the individual PUCCH formats further define the resources for the PUCCH transmission (*e.g., nrofPRBs, nrofSymbols, startingSymbolIndex, etc.*). Once the *PUCCH-ResourceSet* is configured by RRC, the particular PUCCH resource to be used for HARQ-ACK of a DL transmission is indicated by the "PUCCH resource indicator" in the DCI assigning the DL transmission.

As defined in 3GPP TS 38.213 (v15.2.0), if a UE transmits PUCCH on active UL BWP *b* of carrier *f* in the primary cell c using PUCCH power control adjustment state with index *l,* the UE determines the PUCCH transmission power $P_{PUCCH,b,f,c}(i,q_u,q_d,l)$ in PUCCH transmission occasion *i* as in the Equation (1) below:

$$P_{\text{PUCCH},b,f,c}(i, q_u, q_d, l)$$

$$= min \begin{cases} P_{\text{CMAX},f,c}(i), \\ P_{\text{O\_PUCCH},b,f,c}(q_u) + 10\, log_{10}(2^\mu \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{cases}$$

where $P_{PUCCH,b,f,c}(i,q_u,q_d,l)$ is in dBm and $P_{\text{O\_PUCCH},b,f,c}(q_u)$ is a parameter composed of the sum of a component $P_{\text{O\_NOMINAL\_PUCCH}}$, provided by higher layer parameter *p0-nominal* for carrier *f* of primary cell *c*, and a component $P_{\text{O\_UE\_PUCCH}}(q_u)$ provided by higher layer parameter *p0-PUCCH-Value* in P0-PUCCH for UL BWP *b* of carrier *f* of primary cell *c*, where $0 \leq q_u < Q_u$. $Q_u$ is a size for a set of $P_{\text{O\_UE\_PUCCH}}$ values provided by higher layer parameter *maxNrofPUCCH-P0-PerSet*. The set of $P_{\text{O\_UE\_PUCCH}}$ values is provided by higher layer parameter *p0-Set*.

Furthermore, if the UE is provided higher layer parameter *PUCCH-SpatialRelationInfo* (defined further below), the UE obtains a mapping between a set of *pucch-SpatialRelationInfoId* values and a set of *p0-PUCCH-Value* values via an index provided by higher-layer parameter *p0-PUCCH-Id*. If the UE is configured with more than one *pucch-SpatialRelationInfoId* value and the UE receives an activation command indicating a particular *pucch-SpatialRelation-InfoId* value, the UE determines the *p0-PUCCH-Value* value via the associated *p0-PUCCH-Id* index. The UE applies the activation command 3 ms after a slot where the UE transmits HARQ-ACK information for the PDSCH providing the activation command. In contrast, if the UE is not provided higher layer parameter *PUCCH-SpatialRelationInfo,* the UE obtains the *p0-PUCCH-Value* value from the *P0-PUCCH* with *p0-PUCCH-Id* index 0 in *p0-Set.*

As such, a UE can have several power configurations $P_{\text{O\_PUCCH},b,f,c}(q_u)$ that control UL transmit power. The selection of a particular power configuration can be controlled by activation commands that are transmitted to the UE using the "PUCCH Spatial Relation Activation/ Deactivation" MAC CE (defined in 3GPP TS 38.321 (v15.2.0)), by indicating an index to a list/table of the *PUCCH-SpatialRelationInfo* IE configured in the UE via RRC. Figure 8A shows an exemplary ASN.1 data structure for a *PUCCH-SpatialRelationInfo* IE, which is further defined in 3GPP TS 38.331 (v15.2.1).

In the above equation for $P_{\text{PUCCH},b,f,c}(i,q_u,q_d,l)$, the last term $g_{b,f,c}(i,l)$ is the current PUCCH closed-loop power control adjustment state associated with index *l*, and is further based on closed-loop transmit power correction values $\delta_{\text{PUCCH},b,f,c}$ that are also referred to as transmit power control (TPC) commands. As shown in Figure 8A, the *PUCCH-SpatialRelationInfo* IE includes a *closedLoopIndex* element with one or two closed-loop components that can be selected by PUCCH Spatial Relation Activation/Deactivation MAC CE. Furthermore, as defined in 3GPP TS 38.331 (v15.2.1), the *p0-PUCCH-Id* item is associated with a *P0-PUCCH* tuple that also includes the *p0-PUCCH-Value* used in the UE determination of PUCCH transmission power $P_{PUCCH,b,f,c}(i,q_u,q_d,l)$. Figure 8B shows an exemplary ASN.1 data structure for a *P0-PUCCH* IE.

Depending on the particular format, DCI can also include TPC commands for UL channels. For example, Formats 0_0, 0_1, and 2_2 can include TPC commnands for scheduled PUSCH, while Formats 1_0, 1_1, and 2_2 can include TPC commands for scheduled PUCCH. Table 2 below (from 3GPP TS 38.213 (v15.2.0) Table 7.2.1-1) defines the following mapping between the values of the TPC commands for PUCCH and power level of PUCCH:

Table 2.

| TPC Command Field | Accumulated $\delta_{\text{PUCCH},b,f,c}$ [dB] |
|---|---|
| 0 | -1 |
| 1 | 0 |
| 2 | 1 |
| 3 | 3 |

Table 3 below (from 3GPP TS 38.213 (v15.2.0) Table 7.2.1-1) defines the following mapping between the values of the TPC commands for PUSCH and power level of PUSCH:

Table 3.

| TPC Command Field | Accumulated $\delta_{\text{PUSCH},b,f,c}$ or $\delta_{\text{SRS},b,f,c}$ [dB] | Absolute $\delta_{\text{PUSCH},b,f,c}$ or $\delta_{\text{SRS},b,f,c}$ [dB] |
|---|---|---|
| 0 | -1 | -4 |
| 1 | 0 | -1 |
| 2 | 1 | 1 |
| 3 | 3 | 4 |

For example, in a mixed services scenario where the UE runs both eMBB and URLLC services, a particular PUCCH transmission (*e.g.*, carrying HARQ-ACK) can have a different reliability requirement depending on whether the transmission is related to eMBB or to URLLC. Similarly, a particular PUSCH transmissions (*e.g.*, carrying UL data) can have a different reliability requirement depending on whether the transmission is related to eMBB or to URLLC. The difference in reliability requirements can, to some extent, be dynamically adjusted using TPC commands. Even so, if the UE desires to increase power to increase reliability for a first PUCCH transmission (*e.g.*, for URLLC HARQ-ACK) but reduce it back to the previous level for a second PUCCH transmission (*e.g.*, for eMBB HARQ-ACK), the maximum positive adjustment step for the first PUCCH transmission is 1 dB (due, *e.g.*, to certain asymmetries in the mapping tables discussed above).

This limited increase may be inadequate to meet the URLLC reliability requirements. Similarly, for PUSCH, the existing adjustment levels may be insufficient in a mixed-services scenario due to the large differences in reliability requirements.

Accordingly, exemplary embodiments of the present disclosure can address these and other issues, problems, and/or difficulties with current TPC mechanisms by indicating to the UE (*e.g.*, via DCI) a novel TPC mechanism to be used in such scenarios. In this manner, exemplary embodiments can facilitate the compliance with different reliability requirements of mixed services by using service-dependent TPC, *e.g.*, for HARQ-ACK or scheduling request (SR) transmitted on a PUCCH.

In some embodiments, the specification of each *PUCCH-Resource* can be enhanced to include one or more TPC parameters. For example, a *p0-PUCCH Id* item can be added to each *PUCCH-Resource.* Recall that *p0-PUCCH-Id* is associated with a nominal power level component (referred to as *p0-PUCCH-Value*) that is used in the UE determination of PUCCH transmission power $P_{PUCCH,b,f,c}(i, q_u, q_d, l)$ according to Equation (1) above. As another example, an index to one of a plurality of close-loop adjustment states (referred to as *closedLoopIndex*) can be added to each *PUCCH-Resource.* This item is also used in the UE determination of PUCCH transmission power $P_{PUCCH,b,f,c}(i, q_u, q_d, l)$ according to Equation (1) above.

Figure 9 shows an exemplary ASN.1 data structure for a *PUCCH-Resource* IE according to these embodiments. For example, the *PUCCH-Resource* IE show in Figure 9 can replace the legacy *PUCCH-Resource* IE shown in Figure 7. Note that although both *p0-PUCCH-Id* and *closedLoopIndex* are shown in the data structure, this is only for convenience and each of the items can be included independently of the other item.

In this manner, these TPC parameters can be associated with a particular *PUCCH-Resource* that is selected for a particular PUCCH transmission, which enables different TPC settings for different PUCCH transmissions associated with different services. This includes both HARQ-ACK and SR PUCCH transmissions associated with different services having varying reliability requirements.

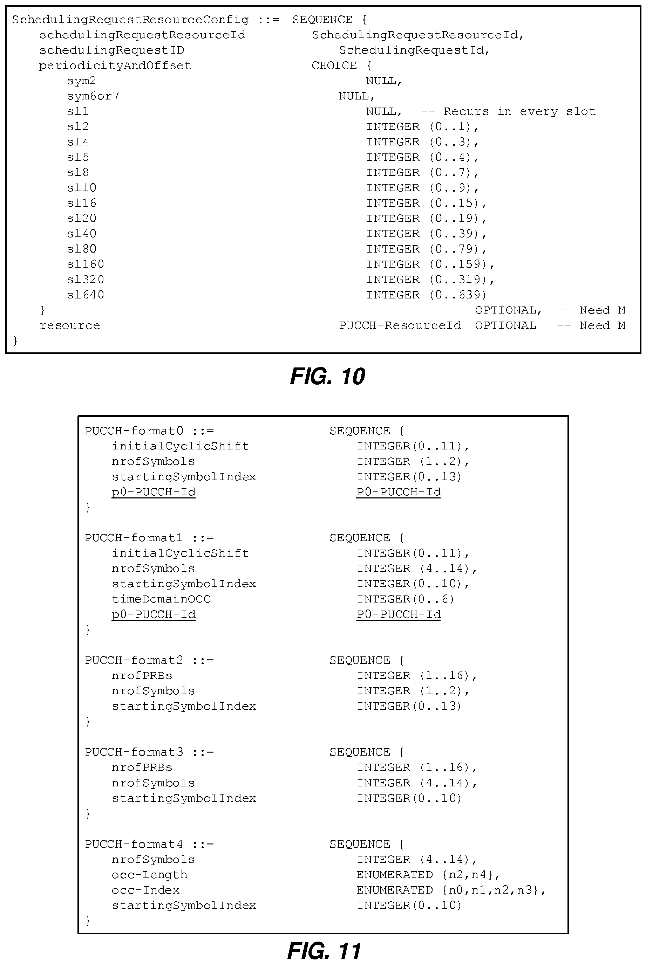

As explained in 3GPP TS 38.321 (v15.2.0), the *SchedulingRequestResourceConfig* RRC IE configures physical layer resources on PUCCH where the UE can send a dedicated SR. Figure 10 shows an exemplary ASN.1 data structure for the *SchedulingRequestResourceConfig* IE. This IE includes a *resource* field (at the end) containing a *PUCCH ResourceId* that points to a particular *PUCCH-Resource* that the UE should use to send the SR. As such, the enhancements of *PUCCH Resource* to include *p0-PUCCH-Id* and/or *closedLoopIndex* according to embodiments described above are also applicable to differentiate TPC of PUCCH SR transmissions according to the requirements of the particular service with which the SR is associated.

In other embodiments, the specification of one or more *PUCCH-formatX* (X=0...4) can be enhanced to include TPC parameter(s) such as a *p0-PUCCH-Id* that is associated with a *p0-PUCCH-Value* component used in the UE determination of PUCCH transmission power. In this manner, different enhanced *PUCCH-formatX* can be selected depending on the service associated with the PUCCH transmission that is intended to use the selected *PUCCH-formatX*. Figure 11 shows an exemplary ASN.1 data structure for *PUCCH-formatX* (X=0...4), in which two of the five formats (i.e., *PUCCH-format0* and *PUCCH-format1*) have been enhanced to include *p0-PUCCH-Id*. For example, these exemplary enhanced *PUCCH-format0* and *PUCCH-format1* can replace the corresponding *PUCCH-format0* and *PUCCH-format1* shown in Figure 7, such that they can be selected by proper choice in the *format* element of the *PUCCH-Resource* IE.

Because the *PUCCH-Resource* definition references the enhanced *PUCCH-formatX* definitions above, and *SchedulingRequestResourceConfig* includes a *resource* field that carries a *PUCCH-ResourceId* that points to a particular *PUCCH-Resource* that the UE should use to send a SR, these embodiments are also applicable to differentiate TPC of PUCCH SR transmissions according to the requirements of the particular service with which the SR is associated.

In other embodiments, TPC mapping tables can be enhanced to include multiple TPC mappings corresponding to requirements of different services. Recall that TPC commands signaled on PDCCH (*e.g.*, with CRC parity bits scrambled by TPC-PUCCH-RNTI) are mapped to the $\delta_{PUCCH, b, f, c}$ (dB) values used for dynamic closed-loop power control of PUCCH. For NR Rel-15 PUCCH TPC, the TPC mappings given in Table 2 above contains four (4) values, with a selection of the four values signaled by a two-bit DCI field. In exemplary embodiments, the TPC mapping table shown in Table 2 can be enhanced to add a separate mapping from TPC command to $\delta_{PUCCH, b, f, c}$ (dB) values used for dynamic power control of PUCCH transmissions (*e.g.*, HARQ-ACK) associated with more strict reliability and/or latency requirements (*e.g.*, "critical traffic" of URLLC services). Table 4 below shows an exemplary enhanced mapping table with different TPC command to $\delta_{\text{PUCCH},b,f,c}$ mappings for "critical" and "non-critical" traffic.

Table 4.

| TPC Command Field | For non-critical traffic<br>Accumulated $\delta_{\text{PUCCH},b,f,c}$ [dB] | For critical traffic<br>Accumulated $\delta_{\text{PUCCH},b,f,c}$ [dB] |
|---|---|---|
| 0 | -1 | -2 |
| 1 | 0 | 0 |
| 2 | 1 | 2 |
| 3 | 3 | 4 |

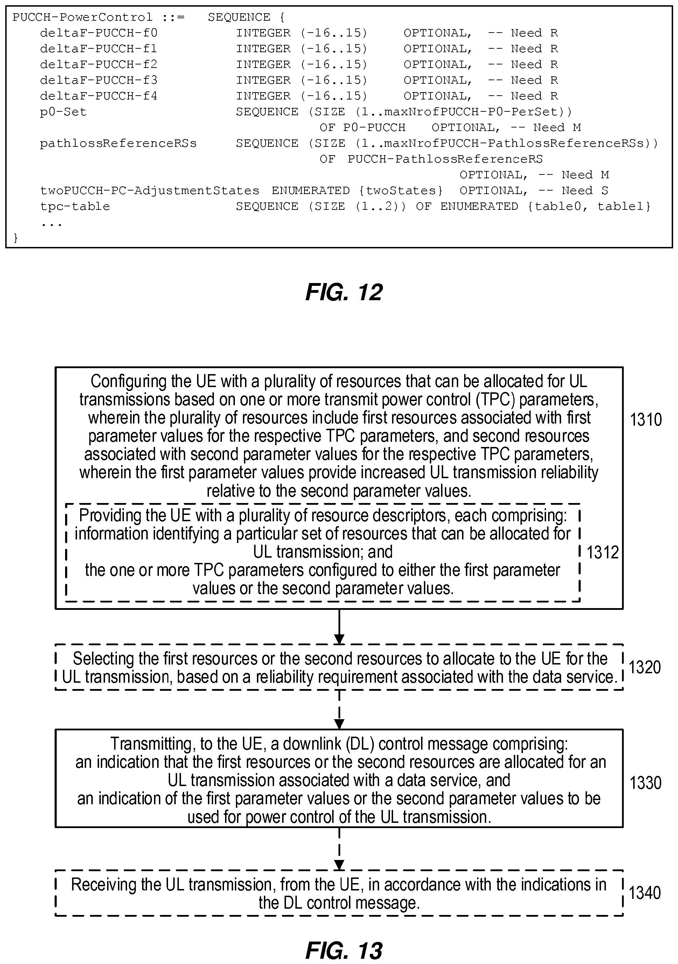

In embodiments where different mapping tables are used, the association between a closed-loop component and a particular mapping table can be configured by RRC. For example, an association with a particular TPC mapping table can be added to *PUCCH-PowerControl* IE. This is illustrated by the exemplary ASN. 1 data structure shown in Figure 12, which includes a *twoPUCCH-PC-AdjustmentStates* field defining two closed-loop adjustment states and a *tpc-table* field that identifies two mapping tables associated with the respectivec closed-loop adjustment states.

Alternately, a particular TPC table can be indicated in *PUCCH-Resource* in a similar manner as described above with respect to other exemplary embodiments. In such case, the network can dynamically indicate a particular TPC mapping table by association with a particular *PUCCH-Resource* indicated via DCI.

Alternately, rather than employing a mapping table with multiple mappings, the TPC command mapping can be enhanced for so-called "critical" traffic by defining an offset and/or adjustment with respect to existing ("non-critical") TPC command mapping. For example, a scaling factor can be specified for application to the existing mappings to generate mappings for critical traffic. As another example, an offset (in dB) can be specified for application to the existing mappings (*e.g.,* added to $\delta_{\text{PUCCH},b,f,c}$ values). The application and/or the amount of the adjustment and/or offset can be RRC configured.

Although the above description pertains to multiple mapping tables for differentiated TPC of PUCCH transmissions, similar principles can be applied to TPC of PUSCH and/or sounding reference signal (SRS) transmissions to enable dynamic adjustment depending on if the transmission is related to URLLC ("critical") or eMBB ("non-critical"). For example, when a mix of critical and non-critical traffic is active, the UE can be configured with a TPC mapping table for "critical" traffic that enables larger adjustment steps than in the TPC mapping table for "non-critical" traffic.

Recall that TPC commands signaled on PDCCH (*e.g.*, with CRC parity bits scrambled by TPC-PUSCH-RNTI) can be mapped to $\delta_{\text{PUSCH},b,f,c}$ (dB) and $\delta_{\text{SRS},b,f,c}$ (dB) values used for dynamic power control of PUSCH or SRS, respectively. For NR Rel-15 PUSCH TPC, the TPC mapping table given in Table 3 above (3GPP TS 38.213 Table 7.1.1-1) contains four (4) values, with a selection of the four values signaled by a two-bit DCI field. In exemplary embodiments, the TPC mapping table shown in Table 3 can be enhanced to add a $\delta_{\text{PUSCH},b,f,c}$ separate mapping from TPC command to and $\delta_{\text{SRS},b,f,c}$ values used for dynamic power control of PUSCH and SRS transmission associated with more strict reliability and/or latency requirements (*e.g.*, "critical traffic" of URLLC services). Table 5 below shows an exemplary enhanced mapping table with different TPC command to $\delta_{\text{PUSCH},b,f,c}$ / $\delta_{\text{SRS},b,f,c}$ mappings for "critical" and "non-critical" traffic.

Table 5.

| TPC Command Field | For non-critical traffic | | For critical traffic | |
|---|---|---|---|---|
| | Accumulated $\delta_{\text{PUSCH},b,f,c}$ or $\delta_{\text{SRS},b,f,c}$ [dB] | Absolute $\delta_{\text{PUSCH},b,f,c}$ or $\delta_{\text{SRS},b,f,c}$ [dB] | Accumulated $\delta_{\text{PUSCH},b,f,c}$ or $\delta_{\text{SRS},b,f,c}$ [dB] | Absolute $\delta_{\text{PUSCH},b,f,c}$ or $\delta_{\text{SRS},b,f,c}$ [dB] |
| 0 | -1 | -4 | -2 | -6 |
| 1 | 0 | -1 | 0 | -2 |
| 2 | 1 | 1 | 2 | 2 |
| 3 | 3 | 4 | 5 | 6 |

Similar to the PUCCH embodiments discussed above, rather than employing a mapping table with multiple mappings, the PUSCH/SRS TPC command mapping can be enhanced for so-called "critical" traffic by defining an offset and/or adjustment with respect to existing ("non-critical") TPC command mapping. For example, a scaling factor can be specified for application to the existing mappings to generate mappings for critical traffic. As another example, an offset (in dB) can be specified for application to the existing mappings (*e.g.*, added to $\delta_{PUSCH,b,f,c}$ / $\delta_{SRS,b,f,c}$ values). The application and/or the amount of the adjustment and/or offset can be RRC configured.

In exemplary Tables 3 and 5 above, a particular TPC command can map to either an accumulated $\delta_{PUSCH,b,f,c}$ / $\delta_{SRS,b,f,c}$ value or an absolute $\delta_{PUSCH,b,f,c}$ / $\delta_{SRS,b,f,c}$ value. Conventionally, the choice between accumulated and absolute mapping is controlled by parameter *tpc-Accumulation,* which is configured by RRC. According to some embodiments, the choice between accumulated and absolute mapping can be independent of RRC configuration (*e.g., tpc-Accumulation*) and instead can be based on the particular DCI format used to send the TPC command. For example, a TPC command for PUSCH/SRS in DCI formats 0_0 and 0_1 could be associated with mapping to an absolute $\delta_{PUSCH,b,f,c}$ / $\delta_{SRS,b,f,c}$ value, while a TPC command in DCI Format 2 could be associated with mapping to an accumulated $\delta_{PUSCH,b,f,c}$ / $\delta_{SRS,b,f,c}$ value. Other variations are also possible.

Unlike the DCI formats (*e.g.*, 1_0 and 1_1) associated with PUCCH that include a "PUCCH resource indicator" field, the DCI formats (*e.g.*, 0_0 and 0_1) associated with PUSCH/SRS do include a corresponding "PUSCH resource indicator" field. Nevertheless, in some embodiments, the "Time domain resource assignment" (TDRA) field in DCI formats 0_0 and 0_1 can be used to indicate power-control setting. In general, TDRA indicates a slot offset K2, a start and length indicator, and the PUSCH mapping type (A or B) to be applied in the PUSCH transmission. Due to its latency requirements, URLLC will be required to use Type B (non-slot-based, *e.g.*, mini-slot-based) PUSCH mapping. Due to this association between criticality and slot-based mapping, in some embodiments, a UE can be configured to always use first power-control settings (*e.g.*, nominal power, closed-loop adjustment, mapping table) for Type A (slot-based) transmissions and second power-control settings (*e.g.*, nominal power, closed-loop adjustment, mapping table) for Type B (non-slot-based) transmissions. The first and second power-control settings can be configured, *e.g.*, by RRC. In other embodiments, TDRA (or other DCI fields comprising TDRA) can be enhanced to include a pointer to particular power-control settings. For example, a one-bit value can indicate one of two power-control settings.

These embodiments described above can be further illustrated with reference to Figures 13-14, which depict exemplary methods and/or procedures performed by a network node and a user equipment, respectively. For example, various embodiments described above correspond to various features of the operations shown in Figures 13-14, described below.

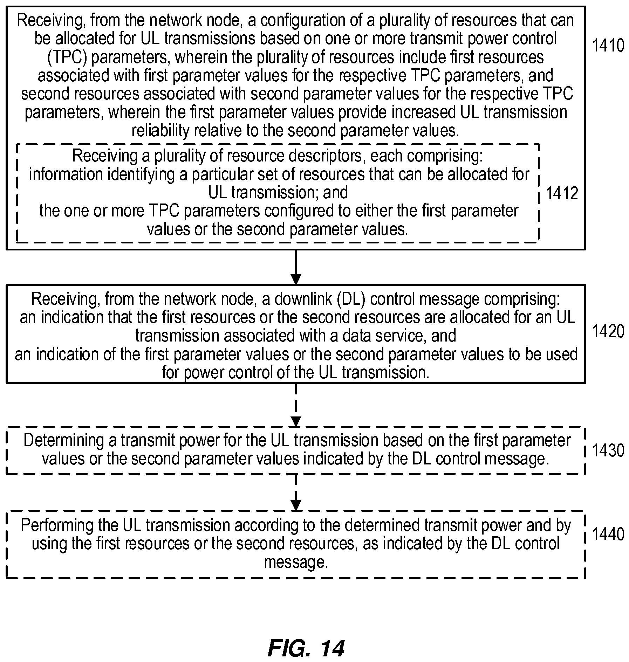

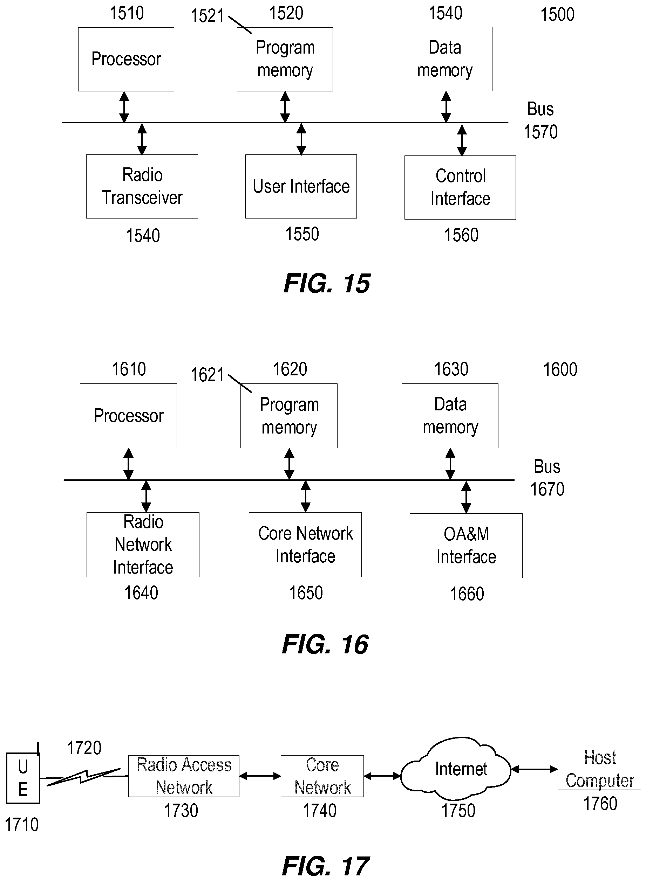

More specifically, Figure 13 shows a flow diagram of an exemplary method and/or procedure for power control of uplink (UL) transmissions, from a user equipment (UE), that are associated with a plurality of data services having different performance requirements. The exemplary method and/or procedure can be performed by a network node (*e.g.,* base station, eNB, gNB, *etc.,* or component thereof) in communication with a UE (*e.g.*, wireless device, IoT device, modem, *etc.* or component thereof). For example, the exemplary method and/or procedure shown in Figure 13 can be implemented in a network node configured according to Figure 16, described below. Furthermore, as explained below, the exemplary method and/or procedure shown in Figure 13 can be utilized cooperatively with other exemplary methods and/or procedures described herein (*e.g.*, Figure 14) to provide various exemplary benefits described herein. Although Figure 13 shows specific blocks in a particular order, the operations of the exemplary method and/or procedure can be performed in a different order than shown and can be combined and/or divided into blocks having different functionality than shown. Optional blocks or operations are shown by dashed lines.

Exemplary embodiments of the method and/or procedure illustrated in Figure 13 can include the operations of block 1310, where the network node can configure the UE with a plurality of resources that can be allocated for UL transmissions based on one or more transmit power control (TPC) parameter. The plurality of resources can include first resources associated with first parameter values for the respective TPC parameters, and second resources associated with second parameter values for the respective TPC parameters. The first parameter values provide increased UL transmission reliability relative to the second parameter values. For example, the plurality of resources can be a *PUCCH-ResourceSet* configured by RRC message(s) from the network node to the UE.

In some embodiments, the operations of block 1310 can include the operations of sub-block 1312, where the network node can provide the UE with a plurality of resource descriptors. Each resource descriptor can include information identifying a particular set of resources that can be allocated for UL transmission, and the one or more TPC parameters configured to either the first parameter values or the second parameter values. In some embodiments, each resource descriptor identifies one of a plurality of available PUCCH formats, and at least portion of the available PUCCH formats are associated with either the first parameter values or the second parameter values.

The exemplary method and/or procedure can also include operations of block 1330, where the network node can transmit, to the UE, a downlink (DL) control message comprising an indication that the first resources or the second resources are allocated for an UL transmission associated with a data service, and an indication of the first parameter values or the second parameter values to be used for power control of the UL transmission. In some embodiments, the indication that the first resources or the second resources are allocated for the UL transmission also indicates the first parameter values or the second parameter values to be used for power control of the UL transmission. In some embodiments, the indication that the first resources or the second resources are allocated includes one of the plurality of resource descriptors (e.g., configured in sub-block 1312).

In some embodiments, the first resources can be associated with a first position in a time-frequency resource grid (e.g., as illustrated by Figures 3 and 5-6), and the second resources are associated with a second position in the time-frequency resource grid. For example, as discussed above and illustrated by Figure 7, each configured *PUCCH-Resource* is associated with a *PUCCH ResourceId* and a *format* selected from five available PUCCH formats, *i.e., PUCCH formatX,* where X = 0...4. *PUCCH-Resource* defines a starting PRB for a PUCCH transmission, while the individual PUCCH formats further define the resources for the PUCCH transmission (*e.g., nrofPRBs, nrofSymbols, startingSymbolIndex, etc.*). In various embodiments, the first position (e.g., as defined by a particular *PUCCH-Resource*) can be the same as or different from the second position (e.g., as defined by a different *PUCCH-Resource*).

In some embodiments, the exemplary method and/or procedure can also include operations of block 1320, where the network node can select the first resources or the second resources to allocate to the UE for the UL transmission (e.g., as indicated in block 1330), based on a reliability requirement associated with the data service.

In some embodiments, one of the following sets of conditions can apply:

- The UL transmission is associated with an ultra-reliable low-latency communication (URLLC) service, and the DL control message indicates that the UE should use the first parameter values; or
- The UL transmission is associated with an enhanced mobile broadband (eMBB) service, and the DL control message indicates that the UE should use the second parameter values.

In some embodiments, the UL transmission associated with the data service is on a physical uplink control channel (PUCCH) or a physical uplink shared channel (PUSCH). In some embodiments, the UL transmission associated with the data service includes at least one of the following: a scheduling request (SR) and a hybrid-ARQ acknowledgement (HARQ-ACK).

In some embodiments, the one or more TPC parameters include a transmit power correction. In such embodiments, the first parameter values comprise mappings of a plurality of TPC command values to respective first transmit power correction values, and the second parameter values comprise mappings of the plurality of TPC command values to respective second transmit power correction values. In some of these embodiments, the second parameter values include a common adjustment or offset between each one of the first transmit power correction values and each one of the second transmit power correction values that are mapped to the same one of the TPC command values. In some embodiments, the DL control message also includes a TPC command having one of the plurality of TPC command values (e.g., mapped to one of the first and one of the second transmit power correction values).

In some embodiments, the one or more TPC parameters include a nominal power level, and the first and second parameter values comprise respective identifiers of first and second nominal transmit power levels. In some embodiments, the one or more TPC parameters include a closed-loop power control adjustment state, and the first and second parameters comprise respective identifiers of first and second closed-loop power control adjustment states.

In some embodiments, the resource allocation can identify a slot-based allocation or a non-slot-based allocation, and identification of a non-slot-based allocation can further indicate that the UE should use the first parameter values.

In some embodiments, the exemplary method and/or procedure also includes the operations of block 1340, where the network node can receive the UL transmission, from the UE, in accordance with the indications sent in the DL control message (e.g., in the resources indicated as allocated and at a power level based on the indication of the first parameter values or the second parameter values).

In addition, Figure 14 shows a flow diagram of an exemplary method and/or procedure for power control of uplink (UL) transmissions to a network node in a radio access network (RAN), the UL transmissions being associated with a plurality of data services having different performance requirements. The exemplary method and/or procedure can be performed by a user equipment (*e.g.,* UE, wireless device, IoT device, modem, *etc.* or component thereof) in communication with the network node (*e.g.,* base station, eNB, gNB, *etc.,* or components thereof). For example, the exemplary method and/or procedure shown in Figure 14 can be implemented by a UE configured according to Figure 15, described below. Furthermore, the exemplary method and/or procedure shown in Figure 14 can be utilized cooperatively with other exemplary methods and/or procedure described herein (e.g., Figure 13) to provide various exemplary benefits described herein. Although Figure 14 shows specific blocks in a particular order, the operations of the exemplary method and/or procedure can be performed in a different order than shown and can be combined and/or divided into blocks having different functionality than shown. Optional blocks or operations are indicated by dashed lines.

The exemplary method and/or procedure illustrated in Figure 14 can include the operations of block 1410, where the UE can receive, from the network node, a configuration of a plurality of resources that can be allocated for UL transmissions based on one or more transmit power control (TPC) parameter. The plurality of resources can include first resources associated with first parameter values for the respective TPC parameters, and second resources associated with second parameter values for the respective TPC parameters. The first parameter values provide increased UL transmission reliability relative to the second parameter values. For example, the plurality of resources can be a *PUCCH-ResourceSet* configured by RRC message(s) from the network node to the UE.

In some embodiments, the operations of block 1410 can include the operations of sub-block 1412, where the UE can receive a plurality of resource descriptors. Each resource descriptor can include information identifying a particular set of resources that can be allocated for UL transmission, and the one or more TPC parameters configured to either the first parameter values or the second parameter values. In some embodiments, each resource descriptor identifies one of a plurality of available PUCCH formats, and at least portion of the available PUCCH formats are associated with either the first parameter values or the second parameter values.

In some embodiments, the first resources can be associated with a first position in a time-frequency resource grid (e.g., as illustrated by Figures 3 and 5-6), and the second resources can be associated with a second position in the time-frequency resource grid. For example, as discussed above and illustrated by Figure 7, each configured *PUCCH-Resource* is associated with a *PUCCH ResourceId* and a *format* selected from five available PUCCH formats, *i.e., PUCCH-formatX,* where X = 0...4. *PUCCH-Resource* defines a starting PRB for a PUCCH transmission, while the individual PUCCH formats further define the resources for the PUCCH transmission (*e.g., nrofPRBs, nrofSymbols, startingSymbolIndex, etc.*). In various embodiments, the first position (e.g., as defined by a particular *PUCCH-Resource*) can be the same as or different from the second position (e.g., as defined by a different *PUCCH-Resource*).

The exemplary method and/or procedure can also include operations of block 1420, where the UE can receive, from the network node, a downlink (DL) control message comprising an indication that the first resources or the second resources are allocated for an UL transmission associated with a data service, and an indication of the first parameter values or the second parameter values to be used for power control of the UL transmission. In some embodiments, the indication that the first resources or the second resources are allocated for the UL transmission also indicates the first parameter values or the second parameter values to be used for power control of the UL transmission. In some embodiments, the indication that the first resources or the second resources are allocated includes one of the plurality of resource descriptors (e.g., configured in sub-block 1412).

In some embodiments, one of the following sets of conditions can apply:

- The UL transmission is associated with an ultra-reliable low-latency communication (URLLC) service, and the DL control message indicates that the UE should use the first parameter values; or
- The UL transmission is associated with an enhanced mobile broadband (eMBB) service, and the DL control message indicates that the UE should use the second parameter values.

In some embodiments, the UL transmission associated with the data service is on a physical uplink control channel (PUCCH) or a physical uplink shared channel (PUSCH). In some embodiments, the UL transmission associated with the data service includes at least one of the following: a scheduling request (SR) and a hybrid-ARQ acknowledgement (HARQ-ACK).

In some embodiments, the one or more TPC parameters include a transmit power correction. In such embodiments, the first parameter values comprise mappings of a plurality of TPC command values to respective first transmit power correction values, and the second parameter values comprise mappings of the plurality of TPC command values to respective second transmit power correction values. In some of these embodiments, the second parameter values include a common adjustment or offset between each one of the first transmit power correction values and each one of the second transmit power correction values that are mapped to the same one of the TPC command values. In some embodiments, the DL control message also includes a TPC command having one of the plurality of TPC command values (e.g., mapped to one of the first and one of the second transmit power correction values).

In some embodiments, the one or more TPC parameters include a nominal power level, and the first and second parameter values comprise respective identifiers of first and second nominal transmit power levels. In some embodiments, the one or more TPC parameters include a closed-loop power control adjustment state, and the first and second parameters comprise respective identifiers of first and second closed-loop power control adjustment states.

In some embodiments, the resource allocation can identify a slot-based allocation or a non-slot-based allocation, and identification of a non-slot-based allocation can further indicate that the UE should use the first parameter values.

In some embodiments, the exemplary method and/or procedure can also include operations of block 1430, where the UE can determine a transmit power for the UL transmission based on the first parameter values or second parameter values indicated by the DL control message. For example, with respect to PUCCH transmissions, the UE can determine a transmit power $P_{PUCCH,b,f,c}(i,q_u,q_d,l)$ in the manner described above with reference to Equation (1).

In some embodiments, the exemplary method and/or procedure can also include operations of block 1440, where the UE can perform the UL transmission according to the determined transmit power and using the first resources or the second resources, as indicated by the DL control message

Although various embodiments are described herein above in terms of methods, apparatus, devices, computer-readable medium and receivers, the person of ordinary skill will readily comprehend that such methods can be embodied by various combinations of hardware and software in various systems, communication devices, computing devices, control devices, apparatuses, non-transitory computer-readable media, *etc.* Figure 15 shows a block diagram of an exemplary wireless device or user equipment (UE) 1500 according to various embodiments of the present disclosure. For example, exemplary device 1500 can be configured by execution of instructions, stored on a computer-readable medium, to perform operations corresponding to one or more of the exemplary methods and/or procedures described above.

Exemplary device 1500 can comprise a processor 1510 that can be operably connected to a program memory 1520 and/or a data memory 1530 via a bus 1570 that can comprise parallel address and data buses, serial ports, or other methods and/or structures known to those of ordinary skill in the art. Program memory 1520 can store software code, programs, and/or instructions (collectively shown as computer program product 1521 in Figure 15) executed by processor 1510 that can configure and/or facilitate device 1500 to perform various operations, including operations described below. For example, execution of such instructions can configure and/or facilitate exemplary device 1500 to communicate using one or more wired or wireless communication protocols, including one or more wireless communication protocols standardized by 3GPP, 3GPP2, or IEEE, such as those commonly known as 5G/NR, LTE, LTE-A, UMTS, HSPA, GSM, GPRS, EDGE, 1xRTT, CDMA2000, 802.15 WiFi, HDMI, USB, Firewire, *etc.,* or any other current or future protocols that can be utilized in conjunction with radio transceiver 1540, user interface 1550, and/or host interface 1560.

For example, processor 1510 can execute program code stored in program memory 1520 that corresponds to MAC, RLC, PDCP, and RRC layer protocols standardized by 3GPP (*e.g.,* for NR and/or LTE). As a further example, processor 1510 can execute program code stored in program memory 1520 that, together with radio transceiver 1540, implements corresponding PHY layer protocols, such as Orthogonal Frequency Division Multiplexing (OFDM), Orthogonal Frequency Division Multiple Access (OFDMA), and Single-Carrier Frequency Division Multiple Access (SC-FDMA).

Program memory 1520 can also comprises software code executed by processor 1510 to control the functions of device 1500, including configuring and controlling various components such as radio transceiver 1540, user interface 1550, and/or host interface 1560. Program memory 1520 can also comprise one or more application programs and/or modules comprising computer-executable instructions embodying any of the exemplary methods and/or procedures described herein. Such software code can be specified or written using any known or future developed programming language, such as *e.g.,* Java, C++, C, Objective C, HTML, XHTML, machine code, and Assembler, as long as the desired functionality, *e.g.,* as defined by the implemented method steps, is preserved. In addition, or as an alternative, program memory 1520 can comprise an external storage arrangement (not shown) remote from device 1500, from which the instructions can be downloaded into program memory 1520 located within or removably coupled to device 1500, so as to enable execution of such instructions.

Data memory 1530 can comprise memory area for processor 1510 to store variables used in protocols, configuration, control, and other functions of device 1500, including operations corresponding to, or comprising, any of the exemplary methods and/or procedures described herein. Moreover, program memory 1520 and/or data memory 1530 can comprise non-volatile memory (*e.g.,* flash memory), volatile memory (*e.g.,* static or dynamic RAM), or a combination thereof. Furthermore, data memory 1530 can comprise a memory slot by which removable memory cards in one or more formats (*e.g.,* SD Card, Memory Stick, Compact Flash, *etc.*) can be inserted and removed. Persons of ordinary skill in the art will recognize that processor 1510 can comprise multiple individual processors (including, *e.g.,* multi-core processors), each of which implements a portion of the functionality described above. In such cases, multiple individual processors can be commonly connected to program memory 1520 and data memory 1530 or individually connected to multiple individual program memories and or data memories. More generally, persons of ordinary skill in the art will recognize that various protocols and other functions of device 1500 can be implemented in many different computer arrangements comprising different combinations of hardware and software including, but not limited to, application processors, signal processors, general-purpose processors, multi-core processors, ASICs, fixed and/or programmable digital circuitry, analog baseband circuitry, radio-frequency circuitry, software, firmware, and middleware.

A radio transceiver 1540 can comprise radio-frequency transmitter and/or receiver functionality that facilitates the device 1500 to communicate with other equipment supporting like wireless communication standards and/or protocols. In some exemplary embodiments, the radio transceiver 1540 includes a transmitter and a receiver that enable device 1500 to communicate with various 5G/NR networks according to various protocols and/or methods proposed for standardization by 3GPP and/or other standards bodies. For example, such functionality can operate cooperatively with processor 1510 to implement a PHY layer based on OFDM, OFDMA, and/or SC-FDMA technologies, such as described herein with respect to other figures.

In some exemplary embodiments, the radio transceiver 1540 includes an LTE transmitter and receiver that can facilitate the device 1500 to communicate with various LTE LTE-Advanced (LTE-A), and/or NR networks according to standards promulgated by 3GPP. In some exemplary embodiments of the present disclosure, the radio transceiver 1540 includes circuitry, firmware, *etc.* necessary for the device 1500 to communicate with various 5G/NR, LTE, LTE-A, UMTS, and/or GSM/EDGE networks, also according to 3GPP standards. In some exemplary embodiments of the present disclosure, radio transceiver 1540 includes circuitry, firmware, *etc.* necessary for the device 1500 to communicate with various CDMA2000 networks, according to 3GPP2 standards.

In some exemplary embodiments of the present disclosure, the radio transceiver 1540 is capable of communicating using radio technologies that operate in unlicensed frequency bands, such as IEEE 802.15 WiFi that operates using frequencies in the regions of 2.4, 5.6, and/or 60 GHz. In some exemplary embodiments of the present disclosure, radio transceiver 1540 can comprise a transceiver that is capable of wired communication, such as by using IEEE 802.3 Ethernet technology. The functionality particular to each of these embodiments can be coupled with or controlled by other circuitry in the device 1500, such as the processor 1510 executing program code stored in program memory 1520 in conjunction with, or supported by, data memory 1530.

User interface 1550 can take various forms depending on the particular embodiment of device 1500, or can be absent from device 1500 entirely. In some exemplary embodiments, user interface 1550 can comprise a microphone, a loudspeaker, slidable buttons, depressible buttons, a display, a touchscreen display, a mechanical or virtual keypad, a mechanical or virtual keyboard, and/or any other user-interface features commonly found on mobile phones. In other embodiments, the device 1500 can comprise a tablet computing device including a larger touchscreen display. In such embodiments, one or more of the mechanical features of the user interface 1550 can be replaced by comparable or functionally equivalent virtual user interface features (*e.g.*, virtual keypad, virtual buttons, *etc.*) implemented using the touchscreen display, as familiar to persons of ordinary skill in the art. In other embodiments, the device 1500 can be a digital computing device, such as a laptop computer, desktop computer, workstation, *etc.* that comprises a mechanical keyboard that can be integrated, detached, or detachable depending on the particular exemplary embodiment. Such a digital computing device can also comprise a touch screen display. Many exemplary embodiments of the device 1500 having a touch screen display are capable of receiving user inputs, such as inputs related to exemplary methods and/or procedures described herein or otherwise known to persons of ordinary skill in the art.

In some exemplary embodiments of the present disclosure, device 1500 can comprise an orientation sensor, which can be used in various ways by features and functions of device 1500. For example, the device 1500 can use outputs of the orientation sensor to determine when a user has changed the physical orientation of the device 1500's touch screen display. An indication signal from the orientation sensor can be available to any application program executing on the device 1500, such that an application program can change the orientation of a screen display (*e.g.*, from portrait to landscape) automatically when the indication signal indicates an approximate 150-degree change in physical orientation of the device. In this exemplary manner, the application program can maintain the screen display in a manner that is readable by the user, regardless of the physical orientation of the device. In addition, the output of the orientation sensor can be used in conjunction with various exemplary embodiments of the present disclosure.

A control interface 1560 of the device 1500 can take various forms depending on the particular exemplary embodiment of device 1500 and of the particular interface requirements of other devices that the device 1500 is intended to communicate with and/or control. For example, the control interface 1560 can comprise an RS-232 interface, an RS-485 interface, a USB interface, an HDMI interface, a Bluetooth interface, an IEEE ("Firewire") interface, an I$^2$C interface, a PCMCIA interface, or the like. In some exemplary embodiments of the present disclosure, control interface 1560 can comprise an IEEE 802.3 Ethernet interface such as described above. In some exemplary embodiments of the present disclosure, the control interface 1560 can comprise analog interface circuitry including, for example, one or more digital-to-analog (D/A) and/or analog-to-digital (A/D) converters.

Persons of ordinary skill in the art can recognize the above list of features, interfaces, and radio-frequency communication standards is merely exemplary, and not limiting to the scope of the present disclosure. In other words, the device 1500 can comprise more functionality than is shown in Figure 15 including, for example, a video and/or still-image camera, microphone, media player and/or recorder, *etc.* Moreover, radio transceiver 1540 can include circuitry necessary to communicate using additional radio-frequency communication standards including Bluetooth, GPS, and/or others. Moreover, the processor 1510 can execute software code stored in the program memory 1520 to control such additional functionality. For example, directional velocity and/or position estimates output from a GPS receiver can be available to any application program executing on the device 1500, including various exemplary methods and/or computer-readable media according to various exemplary embodiments of the present disclosure.

Figure 16 shows a block diagram of an exemplary network node 1600 according to various embodiments of the present disclosure. For example, exemplary network node 1600 can be configured by execution of instructions, stored on a computer-readable medium, to perform operations corresponding to one or more of the exemplary methods and/or procedures described above. In some exemplary embodiments, network node 1600 can comprise a base station, eNB, gNB, or one or more components thereof. For example, network node 1600 can be configured as a central unit (CU) and one or more distributed units (DUs) according to NR gNB architectures specified by 3GPP. More generally, the functionally of network node 1600 can be distributed across various physical devices and/or functional units, modules, etc.

Network node 1600 comprises processor 1610 which is operably connected to program memory 1620 and data memory 1630 via bus 1670, which can comprise parallel address and data buses, serial ports, or other methods and/or structures known to those of ordinary skill in the art.

Program memory 1620 can store software code, programs, and/or instructions (collectively shown as computer program product 1621 in Figure 16) executed by processor 1610 that can configure and/or facilitate network node 1600 to perform various operations, including operations described herein. For example, execution of such stored instructions can configure network node 1600 to communicate with one or more other devices using protocols according to various embodiments of the present disclosure, including one or more exemplary methods and/or procedures discussed above. Furthermore, execution of such stored instructions can also configure and/or facilitate network node 1600 to communicate with one or more other devices using other protocols or protocol layers, such as one or more of the PHY, MAC, RLC, PDCP, and RRC layer protocols standardized by 3GPP for LTE, LTE-A, and/or NR, or any other higher-layer protocols utilized in conjunction with radio network interface 1640 and core network interface 1650. By way of example and without limitation, core network interface 1650 can comprise the S 1 interface and radio network interface 1650 can comprise the Uu interface, as standardized by 3GPP. Program memory 1620 can further comprise software code executed by processor 1610 to control the functions of network node 1600, including configuring and controlling various components such as radio network interface 1640 and core network interface 1650.

Data memory 1630 can comprise memory area for processor 1610 to store variables used in protocols, configuration, control, and other functions of network node 1600. As such, program memory 1620 and data memory 1630 can comprise non-volatile memory (*e.g.*, flash memory, hard disk, *etc.*), volatile memory (*e.g.*, static or dynamic RAM), network-based (*e.g.*, "cloud") storage, or a combination thereof. Persons of ordinary skill in the art will recognize that processor 1610 can comprise multiple individual processors (not shown), each of which implements a portion of the functionality described above. In such case, multiple individual processors may be commonly connected to program memory 1620 and data memory 1630 or individually connected to multiple individual program memories and/or data memories. More generally, persons of ordinary skill in the art will recognize that various protocols and other functions of network node 1600 may be implemented in many different combinations of hardware and software including, but not limited to, application processors, signal processors, general-purpose processors, multi-core processors, ASICs, fixed digital circuitry, programmable digital circuitry, analog baseband circuitry, radio-frequency circuitry, software, firmware, and middleware.

Radio network interface 1640 can comprise transmitters, receivers, signal processors, ASICs, antennas, beamforming units, and other circuitry that enables network node 1600 to communicate with other equipment such as, in some embodiments, a plurality of compatible user equipment (UE). In some exemplary embodiments, radio network interface can comprise various protocols or protocol layers, such as the PHY, MAC, RLC, PDCP, and RRC layer protocols standardized by 3GPP for LTE, LTE-A, and/or 5G/NR; improvements thereto such as described herein above; or any other higher-layer protocols utilized in conjunction with radio network interface 1640. According to further exemplary embodiments of the present disclosure, the radio network interface 1640 can comprise a PHY layer based on OFDM, OFDMA, and/or SC-FDMA technologies. In some embodiments, the functionality of such a PHY layer can be provided cooperatively by radio network interface 1640 and processor 1610 (including program code in memory 1620).

Core network interface 1650 can comprise transmitters, receivers, and other circuitry that enables network node 1600 to communicate with other equipment in a core network such as, in some embodiments, circuit-switched (CS) and/or packet-switched Core (PS) networks. In some embodiments, core network interface 1650 can comprise the S 1 interface standardized by 3GPP. In some embodiments, core network interface 1650 can comprise the NG interface standardized by 3GPP. In some exemplary embodiments, core network interface 1650 can comprise one or more interfaces to one or more SGWs, MMEs, SGSNs, GGSNs, and other physical devices that comprise functionality found in GERAN, UTRAN, EPC, 5GC, and CDMA2000 core networks that are known to persons of ordinary skill in the art. In some embodiments, these one or more interfaces may be multiplexed together on a single physical interface. In some embodiments, lower layers of core network interface 1650 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art.

OA&M interface 1660 can comprise transmitters, receivers, and other circuitry that enables network node 1600 to communicate with external networks, computers, databases, and the like for purposes of operations, administration, and maintenance of network node 1600 or other network equipment operably connected thereto. Lower layers of OA&M interface 1660 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art. Moreover, in some embodiments, one or more of radio network interface 1640, core network interface 1650, and OA&M interface 1660 may be multiplexed together on a single physical interface, such as the examples listed above.

Figure 17 is a block diagram of an exemplary communication network configured to provide over-the-top (OTT) data services between a host computer and a user equipment (UE), according to one or more exemplary embodiments of the present disclosure. UE 1710 can communicate with radio access network (RAN) 1730 over radio interface 1720, which can be based on protocols described above including, e.g., LTE, LTE-A, and 5G/NR. For example, UE 1710 can be configured and/or arranged as shown in other figures discussed above. RAN 1730 can include one or more network nodes (*e.g.*, base stations, eNBs, gNBs, controllers, *etc.*) operable in licensed spectrum bands, as well one or more network nodes operable in unlicensed spectrum (using, *e.g.*, LAA or NR-U technology), such as a 2.4- and/or a 5-GHz band. In such cases, the network nodes comprising RAN 1730 can cooperatively operate using licensed and unlicensed spectrum.

RAN 1730 can further communicate with core network 1740 according to various protocols and interfaces described above. For example, one or more apparatus (*e.g.*, base stations, eNBs, gNBs, *etc.*) comprising RAN 1730 can communicate to core network 1740 via core network interface 1750 described above. In some exemplary embodiments, RAN 1730 and core network 1740 can be configured and/or arranged as shown in other figures discussed above. For example, eNBs comprising an E-UTRAN 1730 can communicate with an EPC core network 1740 via an S1 interface. As another example, gNBs comprising a NR RAN 1730 can communicate with a 5GC core network 1730 via an NG interface. In some embodiments, RAN 1730 can comprise both eNBs and gNBs (or variants thereof), e.g, for supporting both LTE and 5G/NR access by UEs.

Core network 1740 can further communicate with an external packet data network, illustrated in Figure 17 as Internet 1750, according to various protocols and interfaces known to persons of ordinary skill in the art. Many other devices and/or networks can also connect to and communicate via Internet 1750, such as exemplary host computer 1760. In some exemplary embodiments, host computer 1760 can communicate with UE 1710 using Internet 1750, core network 1740, and RAN 1730 as intermediaries. Host computer 1760 can be a server (*e.g.*, an application server) under ownership and/or control of a service provider. Host computer 1760 can be operated by the OTT service provider or by another entity on the service provider's behalf.

For example, host computer 1760 can provide an over-the-top (OTT) packet data service to UE 1710 using facilities of core network 1740 and RAN 1730, which can be unaware of the routing of an outgoing/incoming communication to/from host computer 1760. Similarly, host computer 1760 can be unaware of routing of a transmission from the host computer to the UE, *e.g.*, the routing of the transmission through RAN 1730. Various OTT services can be provided using the exemplary configuration shown in Figure 17 including, *e.g.*, streaming (unidirectional) audio and/or video from host computer to UE, interactive (bidirectional) audio and/or video between host computer and UE, interactive messaging or social communication, interactive virtual or augmented reality, *etc.*

The exemplary network shown in Figure 17 can also include measurement procedures and/or sensors that monitor network performance metrics including data rate, latency and other factors that are improved by exemplary embodiments disclosed herein. The exemplary network can also include functionality for reconfiguring the link between the endpoints (*e.g.*, host computer and UE) in response to variations in the measurement results. Such procedures and functionalities are known and practiced; if the network hides or abstracts the radio interface from the OTT service provider, measurements can be facilitated by proprietary signaling between the UE and the host computer.

it is possible that an NR UE can run multiple concurrent data services having different performance requirements, such as eMBB and URLLC. In these scenarios, various issues, problems, and/or difficulties can arise with respect to controlling the UE's transmit power in a manner that the UE can meet the different performance requirements.

The exemplary embodiments described herein provide efficient techniques for RAN 1730 to facilitate power control of UL transmissions from UEs - such as UE 1710 - in a efficient and predictable manner. When used in NR and/or LTE UEs (*e.g.*, UE 1710) and eNBs and/or gNBs (*e.g.*, comprising RAN 1730), exemplary embodiments described herein enable a UE to run multiple concurrent data services having different performance requirements. For example, using embodiments described herein, a UE can run an enhanced mobile broadband (eMBB) service (which can be used for OTT services, such as media streaming) concurrently with an ultra-reliable, low-latency communication (URLLC) service, without either service negatively impacting the other. Furthermore, by enabling the UE to control its UL transmit power in accordance with each service, such embodiments facilitate reduction in energy consumption, which can result in increased use of OTT services with less need to recharge UE batteries.

The foregoing merely illustrates the principles of the disclosure. Various modifications and alterations to the described embodiments will be apparent to those skilled in the art in view of the teachings herein. Various exemplary embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification, drawings and exemplary embodiments thereof, can be used synonymously in certain instances, including, but not limited to, *e.g.*, data and information. It should be understood that, while these words and/or other words that can be synonymous to one another, can be used synonymously herein, that there can be instances when such words can be intended to not be used synonymously.

## Claims

1. A method, performed by a network node in a radio access network, RAN, for power control of user equipment, UE, uplink, UL, transmissions that are associated with a plurality of data services having different reliability requirements, the method comprising:

   configuring (1310) the UE with a plurality of resources that can be allocated for UL transmissions based on one or more transmit power control, TPC, parameters, wherein the plurality of resources include:

   first resources associated with first parameter values for the respective TPC parameters, and
   second resources associated with second parameter values for the respective TPC parameters,
   wherein the first parameter values provide increased UL transmission reliability relative to the second parameter values;

   transmitting (1330), to a UE, a downlink, DL, control message comprising:

   an indication that the first resources or the second resources are allocated for an UL transmission of a hybrid-ARQ acknowledgement, HARQ-ACK, on a physical uplink control channel, PUCCH, the UL transmission being associated with a data service, and
   an indication that the parameter values associated with the allocated resources are to be used for power control of the UL transmission,
   wherein the indications are provided in terms of a PUCCH resource indicator field which points to a PUCCH-resource entry in a PUCCH-resource set configured by Radio Resource Control, RRC, the PUCCH-resource entry indicating the parameter values to be used for power control of the UL transmission.

2. The method of claim 1, further comprising selecting (1320) the first resources or the second resources to allocate to the UE for the UL transmission, based on a reliability requirement associated with the data service.

3. The method of any of claims 1-2, wherein one of the following sets of conditions applies:

the UL transmission is associated with an ultra-reliable low-latency communication, URLLC, service, and the DL control message indicates that the UE should use the first parameter values; or
the UL transmission is associated with an enhanced mobile broadband, eMBB, service, and the DL control message indicates that the UE should use the second parameter values.

**4.** The method of any of claims 1-3, wherein:

the one or more TPC parameters include a transmit power correction;
the first parameter values comprise mappings of a plurality of TPC command values to respective first transmit power correction values; and
the second parameter values comprise mappings of the plurality of TPC command values to respective second transmit power correction values.

**5.** The method of claim 4, wherein the second parameter values include a common adjustment or offset between each one of the first transmit power correction values and each one of the second transmit power correction values that are mapped to the same one of the TPC command values.

**6.** The method of any of claims 4-5, wherein the DL control message also includes a TPC command having one of the plurality of TPC command values.

**7.** The method of any of claims 1-3, wherein:

the one or more TPC parameters include one or more of the following:

a nominal transmit power level, and
a closed-loop power control adjustment state; and

the first and second parameter values include one or more of the following:

respective identifiers of first and second nominal transmit power levels, and
respective identifiers of first and second closed-loop power control adjustment states.

**8.** A method, performed by a user equipment, UE, for power control of uplink, UL, transmissions to a network node of radio access network, RAN, the UL transmissions associated with a plurality of data services having different reliability requirements, the method comprising:

receiving (1410), from the network node, a configuration of a plurality of resources that can be allocated for UL transmissions based on one or more transmit power control, TPC, parameters, wherein the plurality of resources include:

first resources associated with first parameter values for the respective TPC parameters, and
second resources associated with second parameter values for the respective TPC parameters,
wherein the first parameter values provide increased UL transmission reliability relative to the second parameter values;

receiving (1420), from the network node, a downlink, DL, control message comprising:

an indication that the first resources or the second resources are allocated for an UL transmission of a hybrid-ARQ acknowledgement, HARQ-ACK, on a physical uplink control channel, PUCCH, the UL transmission being associated with a data service; and
an indication that the parameter values associated with the allocated resources are to be used for power control of the UL transmission,
wherein the indications are provided in terms of a PUCCH resource indicator field which points to a PUCCH-resource entry in a PUCCH-resource set configured by Radio Resource Control, RRC, the PUCCH-resource entry indicating the parameter values to be used for power control of the UL transmission.

**9.** The method of claim 8, wherein one of the following sets of conditions applies:

the UL transmission is associated with an ultra-reliable low-latency communication, URLLC, service, and the DL control message indicates that the UE should use the first parameter values; or

the UL transmission is associated with an enhanced mobile broadband, eMBB, service, and the DL control message indicates that the UE should use the second parameter values.

10. The method of any of claims 8-9, wherein:

the one or more TPC parameters include a transmit power correction;
the first parameter values comprise mappings of a plurality of TPC command values to respective first transmit power correction values; and
the second parameter values comprise mappings of the plurality of TPC command values to respective second transmit power correction values.

11. The method of claim 10, wherein the second parameter values include a common adjustment or offset between each one of the first transmit power correction values and each one of the second transmit power correction values that are mapped to the same one of the TPC command values.

12. The method of any of claims 10-11, wherein the DL control message also includes a TPC command having one of the plurality of TPC command values.

13. The method of any of claims 8-10, wherein:

the one or more TPC parameters include one or more of the following:

a nominal transmit power level, and
a closed-loop power control adjustment state; and

the first and second parameter values include one or more of the following:

respective identifiers of first and second nominal transmit power levels, and
respective identifiers of first and second closed-loop power control adjustment states.

14. The method of any of claims 8-13, further comprising:

determining (1430) a transmit power for the UL transmission based on the first parameter values or second parameter values indicated by the DL control message; and
performing (1440) the UL transmission according to the determined transmit power and using the first resources or the second resources, as indicated by the DL control message.

15. A network node (105, 110, 115, 400, 450, 1600) of a radio access network (100, 499), the network node being arranged for power control of user equipment, UE, uplink, UL, transmissions that are associated with a plurality of data services having different reliability requirements, the network node being further arranged to perform operations comprising:

configuring (1310) the UE with a plurality of resources that can be allocated for UL transmissions based on one or more transmit power control, TPC, parameters, wherein the plurality of resources include:

first resources associated with first parameter values for the respective TPC parameters, and
second resources associated with second parameter values for the respective TPC parameters,
wherein the first parameter values provide increased UL transmission reliability relative to the second parameter values;

transmitting (1330), to a UE, a downlink, DL, control message comprising:

an indication that the first resources or the second resources are allocated for an UL transmission of a hybrid-ARQ acknowledgement, HARQ-ACK, on a physical uplink control channel, PUCCH, the UL transmission being associated with a data service, and
an indication that the parameter values associated with the allocated resources are to be used for power control of the UL transmission,

wherein the indications are provided in terms of a PUCCH resource indicator field which points to a PUCCH-resource entry in a PUCCH-resource set configured by Radio Resource Control, RRC, the PUCCH-resource entry indicating the parameter values to be used for power control of the UL transmission.

16. The network node (105, 110, 115, 400, 450, 1600) of claim 15, the network node being further arranged to perform operations corresponding to any of the methods of claims 2-7.

17. A computer program product (2021) comprising computer-executable instructions that, when executed by at least one processor (1610) of a network node (105, 110, 115, 400, 450, 1600) of a radio access network (1009, 499), configure the network node to perform operations corresponding to any of the methods of claims 1-7.

18. A user equipment, UE (120, 1500) arranged for power control of uplink, UL, transmissions to a network node (105, 110, 115, 400, 450, 1600) of a radio access network (100, 499), the UL transmissions associated with a plurality of data services having different reliability requirements, the UE being further arranged to perform operations comprising:

receiving (1410), from the network node, a configuration of a plurality of resources that can be allocated for UL transmissions based on one or more transmit power control, TPC, parameters, wherein the plurality of resources include:

first resources associated with first parameter values for the respective TPC parameters, and
second resources associated with second parameter values for the respective TPC parameters,
wherein the first parameter values provide increased UL transmission reliability relative to the second parameter values;

receiving (1420), from the network node, a downlink, DL, control message comprising:

an indication that the first resources or the second resources are allocated for an UL transmission of a hybrid-ARQ acknowledgement, HARQ-ACK, on a physical uplink control channel, PUCCH, the UL transmission being associated with a data service; and
an indication that the parameter values associated with the allocated resources are to be used for power control of the UL transmission,
wherein the indications are provided in terms of a PUCCH resource indicator field which points to a PUCCH-resource entry in a PUCCH-resource set configured by Radio Resource Control, RRC, the PUCCH-resource entry indicating the parameter values to be used for power control of the UL transmission.

19. The UE (120, 1500) of claim 18, the UE being further arranged to perform operations corresponding to any of the methods of claims 9-14.

20. A computer program product (1521) comprising computer-executable instructions that, when executed by at least one processor comprising a user equipment, UE (120, 1500) operating in a radio access network (100, 499), configure the UE to perform operations corresponding to any of the methods of claims 8-14.

**Patentansprüche**

1. Verfahren, das durch einen Netzwerkknoten in einem Funkzugangsnetzwerk, RAN, durchgeführt wird, zur Leistungssteuerung von Uplink-Übertragungen, UL-Übertragungen, eines Endgerätes, UE, die mit einer Vielzahl von Datendiensten assoziiert sind, welche unterschiedliche Zuverlässigkeitsanforderungen aufweist, wobei das Verfahren Folgendes umfasst:

Konfigurieren (1310) des UE mit einer Vielzahl von Ressourcen, die für UL-Übertragungen basierend auf einem oder mehreren Übertragungsleistungssteuerungsparametern, TPC-Parametern, zugewiesen sein kann, wobei die Vielzahl von Ressourcen Folgendes beinhaltet:

erste Ressourcen, die mit ersten Parameterwerten für die jeweiligen TPC-Parameter assoziiert sind, und
zweite Ressourcen, die mit zweiten Parameterwerten für die jeweiligen TPC-Parameter assoziiert sind,

wobei die ersten Parameterwerte eine relativ zu den zweiten Parameterwerten erhöhte UL-Übertragungszuverlässigkeit bereitstellen;

Übertragen (1330) einer Downlink-Steuernachricht, DL-Steuernachricht, an ein UE, umfassend:

eine Angabe, dass die ersten Ressourcen oder die zweiten Ressourcen für eine UL-Übertragung einer Hybrid-ARQ-Bestätigung, HARQ-ACK, auf einem physischen Uplink-Steuerkanal, PUCCH, zugewiesen sind, wobei die UL-Übertragung mit einem Datendienst assoziiert ist, und

eine Angabe, dass die Parameterwerte, die mit den zugewiesenen Ressourcen assoziiert sind, zur Leistungssteuerung der UL-Übertragung zu verwenden sind,

wobei die Angaben hinsichtlich eines PUCCH-Ressourcenindikatorfeldes bereitgestellt werden, das auf einen PUCCH-Ressourceneintrag in einem PUCCH-Ressourcensatz verweist, der durch eine Funkressourcensteuerung, RRC, konfiguriert ist, wobei der PUCCH-Ressourceneintrag die Parameterwerte angibt, die zur Leistungssteuerung der UL-Übertragung zu verwenden sind.

2. Verfahren nach Anspruch 1, ferner umfassend Auswählen (1320) der ersten Ressourcen oder der zweiten Ressourcen zum Zuweisen zu dem UE für die UL-Übertragung basierend auf einer Zuverlässigkeitsanforderung, die mit dem Datendienst assoziiert ist.

3. Verfahren nach einem der Ansprüche 1-2, wobei einer der folgenden Sätze von Bedingungen zutrifft:

die UL-Übertragung ist mit einem Dienst mit extrem zuverlässiger latenzarmer Kommunikation, URLLC, assoziiert und die DL-Steuernachricht gibt an, dass das UE die ersten Parameterwerte verwenden sollte; oder

die UL-Übertragung ist mit einem Dienst mit erweitertem mobilem Breitband, eMBB, assoziiert und die DL-Steuernachricht gibt an, dass das UE die zweiten Parameter verwenden sollte.

4. Verfahren nach einem der Ansprüche 1-3, wobei:

der eine oder die mehreren Parameter eine Übertragungsleistungskorrektur beinhalten;

die ersten Parameterwerte Zuordnungen einer Vielzahl von TPC-Befehlswerten zu jeweiligen ersten Übertragungsleistungskorrekturwerten umfassen; und

die zweiten Parameterwerte Zuordnungen der Vielzahl von TPC-Befehlswerten zu jeweiligen zweiten Übertragungsleistungskorrekturwerten umfassen.

5. Verfahren nach Anspruch 4, wobei die zweiten Parameterwerte eine gemeinsame Einstellung oder einen gemeinsamen Versatz zwischen jedem der ersten Übertragungsleistungskorrekturwerte und jedem der zweiten Übertragungsleistungskorrekturwerte beinhalten, die demselben der TPC-Befehlswerte zugeordnet sind.

6. Verfahren nach einem der Ansprüche 4-5, wobei die DL-Steuernachricht zudem einen TPC-Befehl beinhaltet, der einen der Vielzahl von TPC-Befehlswerten aufweist.

7. Verfahren nach einem der Ansprüche 1-3, wobei:

der eine oder die mehreren TPC-Parameter eines oder mehrere von Folgendem beinhalten:

einem nominalen Übertragungsleistungspegel und

einem Leistungssteuereinstellungszustand bei geschlossenem Regelkreis; und

die ersten und die zweiten Parameterwerte eines oder mehrere von Folgendem beinhalten:

jeweiligen Kennungen von ersten und zweiten nominalen Übertragungsleistungspegeln und

jeweiligen Kennungen von ersten und zweiten Leistungssteuereinstellungszuständen bei geschlossenem Regelkreis.

8. Verfahren, das durch ein Endgerät, UE, durchgeführt wird, zur Leistungssteuerung von Uplink-Übertragungen, UL-Übertragungen, an einen Netzwerkknoten eines Funkzugangsnetzwerkes, RAN, wobei die UL-Übertragungen mit einer Vielzahl von Datendiensten assoziiert sind, die unterschiedliche Zuverlässigkeitsanforderungen aufweist, wobei das Verfahren Folgendes umfasst:

Empfangen (1410) einer Konfiguration einer Vielzahl von Ressourcen von dem Netzwerkknoten, die für UL-Übertragungen basierend auf einem oder mehreren Übertragungsleistungssteuerparametern, TPC-Parametern, zugewiesen sein kann, wobei die Vielzahl von Ressourcen Folgendes beinhaltet:

erste Ressourcen, die mit ersten Parameterwerten für die jeweiligen TPC-Parameter assoziiert sind, und zweite Ressourcen, die mit zweiten Parameterwerten für die jeweiligen TPC-Parameter assoziiert sind, wobei die ersten Parameterwerte eine relativ zu den zweiten Parameterwerten erhöhte UL-Übertragungszuverlässigkeit bereitstellen;

Empfangen (1420) einer Downlink-Steuernachricht, DL-Steuernachricht, von dem Netzwerkknoten, umfassend:

eine Angabe, dass die ersten Ressourcen oder die zweiten Ressourcen für eine UL-Übertragung einer Hybrid-ARQ-Bestätigung, HARQ-ACK, auf einem physischen Uplink-Steuerkanal, PUCCH, zugewiesen sind, wobei die UL-Übertragung mit einem Datendienst assoziiert ist; und
eine Angabe, dass die Parameterwerte, die mit den zugewiesenen Ressourcen assoziiert sind, zur Leistungssteuerung der UL-Übertragung zu verwenden sind,
wobei die Angaben hinsichtlich eines PUCCH-Ressourcenindikatorfeldes bereitgestellt werden, das auf einen PUCCH-Ressourceneintrag in einem PUCCH-Ressourcensatz verweist, der durch eine Funkressourcensteuerung, RRC, konfiguriert ist, wobei der PUCCH-Ressourceneintrag die Parameterwerte angibt, die zur Leistungssteuerung der UL-Übertragung zu verwenden sind.

9. Verfahren nach Anspruch 8, wobei einer der folgenden Sätze von Bedingungen zutrifft:

die UL-Übertragung ist mit einem Dienst mit extrem zuverlässiger latenzarmer Kommunikation, URLLC, assoziiert und die DL-Steuernachricht gibt an, dass das UE die ersten Parameterwerte verwenden sollte; oder
die UL-Übertragung ist mit einem Dienst mit erweitertem mobilem Breitband, eMBB, assoziiert und die DL-Steuernachricht gibt an, dass das UE die zweiten Parameterwerte verwenden sollte.

10. Verfahren nach einem der Ansprüche 8-9, wobei:

der eine oder die mehreren Parameter eine Übertragungsleistungskorrektur beinhalten;
die ersten Parameterwerte Zuordnungen einer Vielzahl von TPC-Befehlswerten zu jeweiligen ersten Übertragungsleistungskorrekturwerten umfassen; und
die zweiten Parameterwerte Zuordnungen der Vielzahl von TPC-Befehlswerten zu jeweiligen zweiten Übertragungsleistungskorrekturwerten umfassen.

11. Verfahren nach Anspruch 10, wobei die zweiten Parameterwerte eine gemeinsame Einstellung oder einen gemeinsamen Versatz zwischen jedem der ersten Übertragungsleistungskorrekturwerte und jedem der zweiten Übertragungsleistungskorrekturwerte beinhalten, die demselben der TPC-Befehlswerte zugeordnet sind.

12. Verfahren nach einem der Ansprüche 10-11, wobei die DL-Steuernachricht zudem einen TPC-Befehl beinhaltet, der einen der Vielzahl von TPC-Befehlswerten aufweist.

13. Verfahren nach einem der Ansprüche 8-10, wobei:

der eine oder die mehreren TPC-Parameter eines oder mehrere von Folgendem beinhalten:

einem nominalen Übertragungsleistungspegel und
einem Leistungssteuereinstellungszustand bei geschlossenem Regelkreis; und

die ersten und die zweiten Parameterwerte eines oder mehrere von Folgendem beinhalten:

jeweiligen Kennungen von ersten und zweiten nominalen Übertragungsleistungspegeln und
jeweiligen Kennungen von ersten und zweiten Leistungssteuereinstellungszuständen bei geschlossenem Regelkreis.

14. Verfahren nach einem der Ansprüche 8-13, ferner umfassend:

Bestimmen (1430) einer Übertragungsleistung für die UL-Übertragung basierend auf den ersten Parameterwerten oder den zweiten Parameterwerten, die durch die DL-Steuernachricht angegeben werden; und Durchführen (1440) der UL-Übertragung gemäß der bestimmten Übertragungsleistung und Verwenden der ersten Ressourcen oder der zweiten Ressourcen, wie durch die DL-Steuernachricht angegeben.

15. Netzwerkknoten (105, 110, 115, 400, 450, 1600) eines Funkzugangsnetzwerkes (100, 499), wobei der Netzwerkknoten zur Leistungssteuerung von Uplink-Übertragungen, UL-Übertragungen, eines Endgerätes, UE, angeordnet ist, die mit einer Vielzahl von Datendiensten assoziiert sind, welche unterschiedliche Zuverlässigkeitsanforderungen aufweist, wobei der Netzwerkknoten ferner zum Durchführen von Vorgängen angeordnet ist, umfassend:

Konfigurieren (1310) des UE mit einer Vielzahl von Ressourcen, die für UL-Übertragungen basierend auf einem oder mehreren Übertragungsleistungssteuerungsparametern, TPC-Parametern, zugewiesen sein kann, wobei die Vielzahl von Ressourcen Folgendes beinhaltet:

erste Ressourcen, die mit ersten Parameterwerten für die jeweiligen TPC-Parameter assoziiert sind, und zweite Ressourcen, die mit zweiten Parameterwerten für die jeweiligen TPC-Parameter assoziiert sind, wobei die ersten Parameterwerte eine relativ zu den zweiten Parameterwerten erhöhte UL-Übertragungszuverlässigkeit bereitstellen;

Übertragen (1330) einer Downlink-Steuernachricht, DL-Steuernachricht, an ein UE, umfassend:

eine Angabe, dass die ersten Ressourcen oder die zweiten Ressourcen für eine UL-Übertragung einer Hybrid-ARQ-Bestätigung, HARQ-ACK, auf einem physischen Uplink-Steuerkanal, PUCCH, zugewiesen sind, wobei die UL-Übertragung mit einem Datendienst assoziiert ist, und eine Angabe, dass die Parameterwerte, die mit den zugewiesenen Ressourcen assoziiert sind, zur Leistungssteuerung der UL-Übertragung zu verwenden sind, wobei die Angaben hinsichtlich eines PUCCH-Ressourcenindikatorfeldes bereitgestellt werden, das auf einen PUCCH-Ressourceneintrag in einem PUCCH-Ressourcensatz verweist, der durch eine Funkressourcensteuerung, RRC, konfiguriert ist, wobei der PUCCH-Ressourceneintrag die Parameterwerte angibt, die zur Leistungssteuerung der UL-Übertragung zu verwenden sind.

16. Netzwerkknoten (105, 110, 115, 400, 450, 1600) nach Anspruch 15, wobei der Netzwerkknoten ferner zum Durchführen von Vorgängen angeordnet ist, die einem beliebigen der Verfahren nach Anspruch 2-7 entsprechen.

17. Computerprogrammprodukt (2021), umfassend computerausführbare Anweisungen, die bei Ausführung durch mindestens einen Prozessor (1610) eines Netzwerkknotens (105, 110, 115, 400, 1600) eines Funkzugangsnetzwerkes (1009, 499) den Netzwerkknoten dazu konfigurieren, Vorgänge durchzuführen, die einem beliebigen der Verfahren nach Anspruch 1-7 entsprechen.

18. Endgerät, UE (120, 1500), das zur Leistungssteuerung von Uplink-Übertragungen, UL-Übertragungen, an einen Netzwerkknoten (105, 110, 115, 400, 450, 1600) eines Funkzugangsnetzwerkes (100, 499) angeordnet ist, wobei die UL-Übertragungen mit einer Vielzahl von Datendiensten assoziiert sind, die unterschiedliche Zuverlässigkeitsanforderungen aufweist, wobei das UE ferner zum Durchführen von Vorgängen angeordnet ist, umfassend:

Empfangen (1410) einer Konfiguration einer Vielzahl von Ressourcen von dem Netzwerkknoten, die für UL-Übertragungen basierend auf einem oder mehreren Übertragungsleistungssteuerparametern, TPC-Parametern, zugewiesen sein kann, wobei die Vielzahl von Ressourcen Folgendes beinhaltet:

erste Ressourcen, die mit ersten Parameterwerten für die jeweiligen TPC-Parameter assoziiert sind, und zweite Ressourcen, die mit zweiten Parameterwerten für die jeweiligen TPC-Parameter assoziiert sind, wobei die ersten Parameterwerte eine relativ zu den zweiten Parameterwerten erhöhte UL-Übertragungszuverlässigkeit Bereitstellen;

Empfangen (1420) einer Downlink-Steuernachricht, DL-Steuernachricht, von dem Netzwerkknoten, umfassend:

eine Angabe, dass die ersten Ressourcen oder die zweiten Ressourcen für eine UL-Übertragung einer Hybrid-ARQ-Bestätigung, HARQ-ACK, auf einem physischen Uplink-Steuerkanal, PUCCH, zugewiesen sind, wobei die UL-Übertragung mit einem Datendienst assoziiert ist; und

## EP 3 857 991 B1

eine Angabe, dass die Parameterwerte, die mit den zugewiesenen Ressourcen assoziiert sind, zur Leistungssteuerung der UL-Übertragung zu verwenden sind,

wobei die Angaben hinsichtlich eines PUCCH-Ressourcenindikatorfeldes bereitgestellt werden, das auf einen PUCCH-Ressourceneintrag in einem PUCCH-Ressourcensatz verweist, der durch eine Funkressourcensteuerung, RRC, konfiguriert ist, wobei der PUCCH-Ressourceneintrag die Parameterwerte angibt, die zur Leistungssteuerung der UL-Übertragung zu verwenden sind.

19. UE (120, 1500) nach Anspruch 18, wobei das UE ferner zum Durchführen von Vorgängen angeordnet ist, die einem beliebigen der Verfahren nach Anspruch 9-14 entsprechen.

20. Computerprogrammprodukt (1521), umfassend computerausführbare Anweisungen, die bei Ausführung durch mindestens einen Prozessor, der ein Endgerät, UE (120, 1500), umfasst, das in einem Funkzugangsnetzwerk (100, 499) betrieben wird, das UE dazu konfigurieren, Vorgänge durchzuführen, die einem beliebigen der Verfahren nach Anspruch 8-14 entsprechen.

## Revendications

1. Procédé, réalisé par un noeud de réseau dans un réseau d'accès radio, RAN, pour une commande de puissance de transmissions de liaison montante, UL, d'équipement utilisateur, UE, qui sont associées à une pluralité de services de données ayant différentes exigences de fiabilité, le procédé comprenant :

la configuration (1310) de l'UE avec une pluralité de ressources qui peuvent être allouées pour des transmissions UL sur la base d'un ou de plusieurs paramètres de commande de puissance de transmission, TPC, dans lequel la pluralité de ressources comportent :

des premières ressources associées à des premières valeurs de paramètre pour les paramètres TPC respectifs, et
des secondes ressources associées à des secondes valeurs de paramètre pour les paramètres TPC respectifs,
dans lequel les premières valeurs de paramètre fournissent une fiabilité de transmission UL accrue par rapport aux secondes valeurs de paramètre ;

la transmission (1330), à un UE, d'un message de commande de liaison descendante, DL, comprenant :

une indication que les premières ressources ou les secondes ressources sont allouées pour une transmission UL d'un accusé de réception hybride-ARQ, HARQ-ACK, sur un canal de commande de liaison montante physique, PUCCH, la transmission UL étant associée à un service de données, et
une indication que les valeurs de paramètre associées aux ressources allouées doivent être utilisées pour une commande de puissance de la transmission UL,
dans lequel les indications sont fournies sous la forme d'un champ d'indicateur de ressource PUCCH qui pointe vers une entrée de ressource PUCCH dans un ensemble de ressources PUCCH configuré par commande de ressource radio, RRC, l'entrée de ressource PUCCH indiquant les valeurs de paramètre à utiliser pour une commande de puissance de la transmission UL.

2. Procédé selon la revendication 1, comprenant en outre la sélection (1320) des premières ressources ou des secondes ressources à allouer à l'UE pour la transmission UL, sur la base d'une exigence de fiabilité associée au service de données.

3. Procédé selon l'une quelconque des revendications 1 à 2, dans lequel l'un des ensembles de conditions suivants s'applique :

la transmission UL est associée à un service de communication à faible latence ultra-fiable, URLLC, et le message de commande DL indique que l'UE doit utiliser les premières valeurs de paramètre ; ou
la transmission UL est associée à un service haut débit mobile amélioré, eMBB, et le message de commande DL indique que l'UE doit utiliser les secondes valeurs de paramètre.

4. Procédé selon l'une quelconque des revendications 1 à 3, dans lequel :

les un ou plusieurs paramètres TPC comportent une correction de puissance de transmission ;
les premières valeurs de paramètre comprennent des mappages d'une pluralité de valeurs d'instruction TPC sur des premières valeurs de correction de puissance de transmission respectives ; et
les secondes valeurs de paramètre comprennent des mappages de la pluralité de valeurs de commande TPC sur des secondes valeurs de correction de puissance de transmission respectives.

**5.** Procédé selon la revendication 4, dans lequel les secondes valeurs de paramètre comportent un réglage ou un décalage commun entre chacune des premières valeurs de correction de puissance de transmission et chacune des secondes valeurs de correction de puissance de transmission qui sont mappées sur la même des valeurs de commande TPC.

**6.** Procédé selon l'une quelconque des revendications 4 et 5, dans lequel le message de commande DL comporte également une commande TPC ayant l'une de la pluralité de valeurs de commande TPC.

**7.** Procédé selon l'une quelconque des revendications 1 à 3, dans lequel :

les un ou plusieurs paramètres TPC comportent un ou plusieurs des éléments suivants :

un niveau de puissance de transmission nominal, et
un état de réglage de commande de puissance en boucle fermée ; et

les premières et secondes valeurs de paramètre comportent un ou plusieurs des éléments suivants :

des identifiants respectifs des premier et second niveaux de puissance de transmission nominaux, et
des identifiants respectifs des premier et second états de réglage de commande de puissance en boucle fermée.

**8.** Procédé, réalisé par un équipement utilisateur, UE, pour une commande de puissance de transmissions de liaison montante, UL, vers un noeud de réseau du réseau d'accès radio, RAN, les transmissions UL étant associées à une pluralité de services de données ayant des exigences de fiabilité différentes, le procédé comprenant :

la réception (1410), à partir du noeud de réseau, d'une configuration d'une pluralité de ressources qui peuvent être allouées pour des transmissions UL sur la base d'un ou de plusieurs paramètres de commande de puissance de transmission, TPC, dans lequel la pluralité de ressources comportent :

des premières ressources associées à des premières valeurs de paramètre pour les paramètres TPC respectifs, et
des secondes ressources associées à des secondes valeurs de paramètre pour les paramètres TPC respectifs,
dans lequel les premières valeurs de paramètre fournissent une fiabilité de transmission UL accrue par rapport aux secondes valeurs de paramètre ;

la réception (1420), à partir du noeud de réseau, d'un message de commande de liaison descendante, DL, comprenant :

une indication que les premières ressources ou les secondes ressources sont allouées pour une transmission UL d'un accusé de réception hybride-ARQ, HARQ-ACK, sur un canal de commande de liaison montante physique, PUCCH, la transmission UL étant associée à un service de données ; et
une indication que les valeurs de paramètre associées aux ressources allouées doivent être utilisées pour une commande de puissance de la transmission UL,
dans lequel les indications sont fournies sous la forme d'un champ d'indicateur de ressource PUCCH qui pointe vers une entrée de ressource PUCCH dans un ensemble de ressources PUCCH configuré par commande de ressource radio, RRC, l'entrée de ressource PUCCH indiquant les valeurs de paramètre à utiliser pour une commande de puissance de la transmission UL.

**9.** Procédé selon la revendication 8, dans lequel l'un des ensembles de conditions suivants s'applique :

la transmission UL est associée à un service de communication à faible latence ultra-fiable, URLLC, et le message de commande DL indique que l'UE doit utiliser les premières valeurs de paramètre ; ou
la transmission UL est associée à un service haut débit mobile amélioré, eMBB, et le message de commande DL indique que l'UE doit utiliser les secondes valeurs de paramètre.

10. Procédé selon l'une quelconque des revendications 8 à 9, dans lequel :

les un ou plusieurs paramètres TPC comportent une correction de puissance de transmission ;
les premières valeurs de paramètre comprennent des mappages d'une pluralité de valeurs d'instruction TPC sur des premières valeurs de correction de puissance de transmission respectives ; et
les secondes valeurs de paramètre comprennent des mappages de la pluralité de valeurs d'instruction TPC sur des secondes valeurs respectives de correction de puissance de transmission.

11. Procédé selon la revendication 10, dans lequel les secondes valeurs de paramètre comportent un réglage ou un décalage commun entre chacune des premières valeurs de correction de puissance de transmission et chacune des secondes valeurs de correction de puissance de transmission qui sont mappées sur la même des valeurs d'instruction TPC.

12. Procédé selon l'une quelconque des revendications 10 à 11, dans lequel le message de commande DL comporte également une instruction TPC ayant l'une de la pluralité de valeurs d'instruction TPC.

13. Procédé selon l'une quelconque des revendications 8 à 10, dans lequel :

les un ou plusieurs paramètres TPC comportent un ou plusieurs des éléments suivants :

un niveau de puissance de transmission nominal, et
un état de réglage de commande de puissance en boucle fermée ; et

les premières et secondes valeurs de paramètre comportent un ou plusieurs des éléments suivants :

des identifiants respectifs des premier et second niveaux de puissance de transmission nominaux, et
des identifiants respectifs des premier et second états de réglage de commande de puissance en boucle fermée.

14. Procédé selon l'une quelconque des revendications 8 à 13, comprenant en outre :

la détermination (1430) d'une puissance de transmission pour la transmission UL sur la base des premières valeurs de paramètre ou des secondes valeurs de paramètre indiquées par le message de commande DL ; et
la réalisation (1440) de la transmission UL selon la puissance de transmission déterminée et l'utilisation des premières ressources ou des secondes ressources, comme indiqué par le message de commande DL.

15. Noeud de réseau (105, 110, 115, 400, 450, 1600) d'un réseau d'accès radio (100, 499), le noeud de réseau étant agencé pour une commande de puissance de transmissions de liaison montante, UL, d'équipement utilisateur, UE, qui sont associées à une pluralité de services de données ayant des exigences de fiabilité différentes, le noeud de réseau étant en outre agencé pour réaliser des opérations comprenant :

la configuration (1310) de l'UE avec une pluralité de ressources qui peuvent être allouées pour des transmissions UL sur la base d'un ou de plusieurs paramètres de commande de puissance de transmission, TPC, dans lequel la pluralité de ressources comportent :

des premières ressources associées à des premières valeurs de paramètre pour les paramètres TPC respectifs, et
des secondes ressources associées à des secondes valeurs de paramètre pour les paramètres TPC respectifs,
dans lequel les premières valeurs de paramètre fournissent une fiabilité de transmission UL accrue par rapport aux secondes valeurs de paramètre ;

la transmission (1330), à un UE, d'un message de commande de liaison descendante, DL, comprenant :

une indication que les premières ressources ou les secondes ressources sont allouées pour une transmission UL d'un accusé de réception hybride-ARQ, HARQ-ACK, sur un canal de commande de liaison montante physique, PUCCH, la transmission UL étant associée à un service de données, et

une indication que les valeurs de paramètre associées aux ressources allouées doivent être utilisées pour une commande de puissance de la transmission UL,

dans lequel les indications sont fournies sous la forme d'un champ d'indicateur de ressource PUCCH qui pointe vers une entrée de ressource PUCCH dans un ensemble de ressources PUCCH configuré par commande de ressource radio, RRC, l'entrée de ressource PUCCH indiquant les valeurs de paramètre à utiliser pour une commande de puissance de la transmission UL.

**16.** Noeud de réseau (105, 110, 115, 400, 450, 1600) selon la revendication 15, le noeud de réseau étant en outre agencé pour réaliser des opérations correspondant à l'un quelconque des procédés selon les revendications 2 à 7.

**17.** Produit de programme informatique (2021) comprenant des instructions exécutables par ordinateur qui, lorsqu'elles sont exécutées par au moins un processeur (1610) d'un noeud de réseau (105, 110, 115, 400, 450, 1600) d'un réseau d'accès radio (1009, 499), configurent le noeud de réseau pour réaliser des opérations correspondant à l'un quelconque des procédés selon les revendications 1 à 7.

**18.** Équipement utilisateur, UE (120, 1500) agencé pour une commande de puissance de transmissions de liaison montante, UL, vers un noeud de réseau (105, 110, 115, 400, 450, 1600) d'un réseau d'accès radio (100, 499), les transmissions UL étant associées à une pluralité de services de données ayant des exigences de fiabilité différentes, l'UE étant en outre agencé pour réaliser des opérations comprenant :

la réception (1410), à partir du noeud de réseau, d'une configuration d'une pluralité de ressources qui peuvent être allouées pour des transmissions UL sur la base d'un ou de plusieurs paramètres de commande de puissance de transmission, TPC, dans lequel la pluralité de ressources comportent :

des premières ressources associées à des premières valeurs de paramètre pour les paramètres TPC respectifs, et

des secondes ressources associées à des secondes valeurs de paramètre pour les paramètres TPC respectifs,

dans lequel les premières valeurs de paramètre fournissent une fiabilité de transmission UL accrue par rapport aux secondes valeurs de paramètre ;

la réception (1420), à partir du noeud de réseau, d'un message de commande de liaison descendante, DL, comprenant :

une indication que les premières ressources ou les secondes ressources sont allouées pour une transmission UL d'un accusé de réception hybride-ARQ, HARQ-ACK, sur un canal de commande de liaison montante physique, PUCCH, la transmission UL étant associée à un service de données ; et

une indication que les valeurs de paramètre associées aux ressources allouées doivent être utilisées pour une commande de puissance de la transmission UL,

dans lequel les indications sont fournies sous la forme d'un champ d'indicateur de ressource PUCCH qui pointe vers une entrée de ressource PUCCH dans un ensemble de ressources PUCCH configuré par commande de ressource radio, RRC, l'entrée de ressource PUCCH indiquant les valeurs de paramètre à utiliser pour une commande de puissance de la transmission UL.

**19.** UE (120, 1500) selon la revendication 18, l'UE étant en outre agencé pour réaliser des opérations correspondant à l'un quelconque des procédés selon les revendications 9 à 14.

**20.** Produit de programme informatique (1521) comprenant des instructions exécutables par ordinateur qui, lorsqu'elles sont exécutées par au moins un processeur comprenant un équipement utilisateur, UE (120, 1500) fonctionnant dans un réseau d'accès radio (100, 499), configurent l'UE pour réaliser des opérations correspondant à l'un quelconque des procédés selon les revendications 8 à 14.

**FIG. 1**

**FIG. 2A**

**FIG. 2B**

**FIG. 2C**

One radio frame, $T_f = 307200 T_s = 10$ ms

One slot, $T_{slot} = 15360 T_s = 0.5$ ms

| #0 | #1 | #2 | #3 | ------------- | #18 | #19 |

One subframe

$N_{symb}^{DL}$ OFDM symbols

$N_{RB}^{DL} N_{sc}^{RB} - 1$

Resource block of $N_{symb}^{DL} \times N_{sc}^{RB}$ resource elements

Resource element $(k, l)$

$N_{RB}^{DL} \times N_{sc}^{RB}$ subcarriers

$N_{sc}^{RB}$ subcarriers

$k = 0$

$l = 0$

$: N_{symb}^{DL} - 1$

**FIG. 3A**

FIG. 3B

**FIG. 4**

**FIG. 5**

Mini-slot
(variable start and length)

← →

←——————————————slot——————————————→

**FIG. 6**

```
PUCCH-SpatialRelationInfo ::=          SEQUENCE {
    pucch-SpatialRelationInfoId        PUCCH-SpatialRelationInfoId,
    servingCellId                      ServCellIndex      OPTIONAL,  -- Need S
    referenceSignal                    CHOICE {
        ssb-Index                          SSB-Index,
        csi-RS-Index                       NZP-CSI-RS-ResourceId,
        srs                                SEQUENCE {
                                               resource   SRS-ResourceId,
                                               uplinkBWP  BWP-Id
                                           }
                                       },
    pucch-PathlossReferenceRS-Id       PUCCH-PathlossReferenceRS-Id,
    p0-PUCCH-Id                        P0-PUCCH-Id,
    closedLoopIndex                    ENUMERATED { i0, i1 }
}
```

**FIG. 8A**

```
P0-PUCCH ::=                           SEQUENCE {
    p0-PUCCH-Id                            P0-PUCCH-Id,
    p0-PUCCH-Value                         INTEGER (-16..15)
}

P0-PUCCH-Id ::=                        INTEGER (1..8)
```

**FIG. 8B**

```
PUCCH-Resource ::=            SEQUENCE {
    pucch-ResourceId             PUCCH-ResourceId,
    startingPRB                  PRB-Id,
    intraSlotFrequencyHopping    ENUMERATED { enabled }   OPTIONAL,  -- Need R
    secondHopPRB                 PRB-Id                    OPTIONAL,  -- Need R
    format                       CHOICE {
        format0                      PUCCH-format0, -- Cond InFirstSetOnly
        format1                      PUCCH-format1, -- Cond InFirstSetOnly
        format2                      PUCCH-format2, -- Cond NotInFirstSet
        format3                      PUCCH-format3, -- Cond NotInFirstSet
        format4                      PUCCH-format4  -- Cond NotInFirstSet
    }
    p0-PUCCH-Id                  P0-PUCCH-Id
    closedLoopIndex             ENUMERATED { i0, i1 }
}
```

**FIG. 9**

```
PUCCH-ResourceSet ::=            SEQUENCE {
    pucch-ResourceSetId          PUCCH-ResourceSetId,
    resourceList                 SEQUENCE (SIZE (1..maxNrofPUCCH-ResourcesPerSet))
                                              OF PUCCH-ResourceId,
    maxPayloadMinus1             INTEGER (4..256)           OPTIONAL   -- Need R
}


PUCCH-ResourceSetId ::=                INTEGER (0..maxNrofPUCCH-ResourceSets-1)

PUCCH-Resource ::=                     SEQUENCE {
    pucch-ResourceId                   PUCCH-ResourceId,
    startingPRB                        PRB-Id,
    intraSlotFrequencyHopping          ENUMERATED { enabled } OPTIONAL,   -- Need R
    secondHopPRB                       PRB-Id                 OPTIONAL,   -- Need R
    format                             CHOICE {
        format0                            PUCCH-format0,  -- Cond InFirstSetOnly
        format1                            PUCCH-format1,  -- Cond InFirstSetOnly
        format2                            PUCCH-format2,  -- Cond NotInFirstSet
        format3                            PUCCH-format3,-- Cond NotInFirstSet
        format4                            PUCCH-format4 -- Cond NotInFirstSet
    }
}


PUCCH-ResourceId ::=                   INTEGER (0..maxNrofPUCCH-Resources-1)

PUCCH-format0 ::=                SEQUENCE {
    initialCyclicShift               INTEGER(0..11),
    nrofSymbols                      INTEGER (1..2),
    startingSymbolIndex              INTEGER(0..13)
}


PUCCH-format1 ::=                      SEQUENCE {
    initialCyclicShift               INTEGER(0..11),
    nrofSymbols                      INTEGER (4..14),
    startingSymbolIndex              INTEGER(0..10),
    timeDomainOCC                    INTEGER(0..6)
}


PUCCH-format2 ::=                      SEQUENCE {
    nrofPRBs                         INTEGER (1..16),
    nrofSymbols                      INTEGER (1..2),
    startingSymbolIndex              INTEGER(0..13)
}


PUCCH-format3 ::=                      SEQUENCE {
    nrofPRBs                         INTEGER (1..16),
    nrofSymbols                      INTEGER (4..14),
    startingSymbolIndex              INTEGER(0..10)
}


PUCCH-format4 ::=                      SEQUENCE {
    nrofSymbols                      INTEGER (4..14),
    occ-Length                       ENUMERATED {n2,n4},
    occ-Index                        ENUMERATED {n0,n1,n2,n3},
    startingSymbolIndex              INTEGER(0..10)
}
```

*FIG. 7*

```
SchedulingRequestResourceConfig ::=   SEQUENCE {
    schedulingRequestResourceId           SchedulingRequestResourceId,
    schedulingRequestID                     SchedulingRequestId,
    periodicityAndOffset                  CHOICE {
        sym2                                  NULL,
        sym6or7                             NULL,
        sl1                                   NULL,  -- Recurs in every slot
        sl2                                   INTEGER (0..1),
        sl4                                   INTEGER (0..3),
        sl5                                   INTEGER (0..4),
        sl8                                   INTEGER (0..7),
        sl10                                  INTEGER (0..9),
        sl16                                  INTEGER (0..15),
        sl20                                  INTEGER (0..19),
        sl40                                  INTEGER (0..39),
        sl80                                  INTEGER (0..79),
        sl160                                 INTEGER (0..159),
        sl320                                 INTEGER (0..319),
        sl640                                 INTEGER (0..639)
    }                                                       OPTIONAL,   -- Need M
    resource                              PUCCH-ResourceId  OPTIONAL   -- Need M
}
```

## FIG. 10

```
PUCCH-format0 ::=               SEQUENCE {
    initialCyclicShift              INTEGER(0..11),
    nrofSymbols                     INTEGER (1..2),
    startingSymbolIndex             INTEGER(0..13)
    p0-PUCCH-Id                     P0-PUCCH-Id
}

PUCCH-format1 ::=               SEQUENCE {
    initialCyclicShift              INTEGER(0..11),
    nrofSymbols                     INTEGER (4..14),
    startingSymbolIndex             INTEGER(0..10),
    timeDomainOCC                   INTEGER(0..6)
    p0-PUCCH-Id                     P0-PUCCH-Id
}

PUCCH-format2 ::=               SEQUENCE {
    nrofPRBs                        INTEGER (1..16),
    nrofSymbols                     INTEGER (1..2),
    startingSymbolIndex             INTEGER(0..13)
}

PUCCH-format3 ::=               SEQUENCE {
    nrofPRBs                        INTEGER (1..16),
    nrofSymbols                     INTEGER (4..14),
    startingSymbolIndex             INTEGER(0..10)
}

PUCCH-format4 ::=               SEQUENCE {
    nrofSymbols                     INTEGER (4..14),
    occ-Length                      ENUMERATED {n2,n4},
    occ-Index                       ENUMERATED {n0,n1,n2,n3},
    startingSymbolIndex             INTEGER(0..10)
}
```

## FIG. 11

```
PUCCH-PowerControl ::=    SEQUENCE {
    deltaF-PUCCH-f0          INTEGER (-16..15)     OPTIONAL,   -- Need R
    deltaF-PUCCH-f1          INTEGER (-16..15)     OPTIONAL,   -- Need R
    deltaF-PUCCH-f2          INTEGER (-16..15)     OPTIONAL,   -- Need R
    deltaF-PUCCH-f3          INTEGER (-16..15)     OPTIONAL,   -- Need R
    deltaF-PUCCH-f4          INTEGER (-16..15)     OPTIONAL,   -- Need R
    p0-Set                   SEQUENCE (SIZE (1..maxNrofPUCCH-P0-PerSet))
                                      OF P0-PUCCH    OPTIONAL,  -- Need M
    pathlossReferenceRSs     SEQUENCE (SIZE (1..maxNrofPUCCH-PathlossReferenceRSs))
                                      OF  PUCCH-PathlossReferenceRS
                                               OPTIONAL,   -- Need M
    twoPUCCH-PC-AdjustmentStates ENUMERATED {twoStates}  OPTIONAL,  -- Need S
    tpc-table                SEQUENCE (SIZE (1..2)) OF ENUMERATED {table0, table1}
    ...
}
```

## FIG. 12

Configuring the UE with a plurality of resources that can be allocated for UL transmissions based on one or more transmit power control (TPC) parameters, wherein the plurality of resources include first resources associated with first parameter values for the respective TPC parameters, and second resources associated with second parameter values for the respective TPC parameters, wherein the first parameter values provide increased UL transmission reliability relative to the second parameter values.   1310

Providing the UE with a plurality of resource descriptors, each comprising: information identifying a particular set of resources that can be allocated for UL transmission; and the one or more TPC parameters configured to either the first parameter values or the second parameter values.   1312

Selecting the first resources or the second resources to allocate to the UE for the UL transmission, based on a reliability requirement associated with the data service.   1320

Transmitting, to the UE, a downlink (DL) control message comprising: an indication that the first resources or the second resources are allocated for an UL transmission associated with a data service, and an indication of the first parameter values or the second parameter values to be used for power control of the UL transmission.   1330

Receiving the UL transmission, from the UE, in accordance with the indications in the DL control message.   1340

## FIG. 13

Receiving, from the network node, a configuration of a plurality of resources that can be allocated for UL transmissions based on one or more transmit power control (TPC) parameters, wherein the plurality of resources include first resources associated with first parameter values for the respective TPC parameters, and second resources associated with second parameter values for the respective TPC parameters, wherein the first parameter values provide increased UL transmission reliability relative to the second parameter values.

1410

Receiving a plurality of resource descriptors, each comprising: information identifying a particular set of resources that can be allocated for UL transmission; and the one or more TPC parameters configured to either the first parameter values or the second parameter values.

1412

Receiving, from the network node, a downlink (DL) control message comprising: an indication that the first resources or the second resources are allocated for an UL transmission associated with a data service, and an indication of the first parameter values or the second parameter values to be used for power control of the UL transmission.

1420

Determining a transmit power for the UL transmission based on the first parameter values or the second parameter values indicated by the DL control message.

1430

Performing the UL transmission according to the determined transmit power and by using the first resources or the second resources, as indicated by the DL control message.

1440

*FIG. 14*

1510    1521    1520    1540    1500

Processor    Program memory    Data memory

Bus
1570

Radio Transceiver    User Interface    Control Interface

1540    1550    1560

## FIG. 15

1610    1621    1620    1630    1600

Processor    Program memory    Data memory

Bus
1670

Radio Network Interface    Core Network Interface    OA&M Interface

1640    1650    1660

## FIG. 16

U E    1720    Radio Access Network    Core Network    Internet    Host Computer

1710    1730    1740    1750    1760

## FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018171326 A1


**Non-patent literature cited in the description**

- Discussion on handling collision issues of UL URLLC and eMBB. *R1-1806369, 3GPP TSG RAN WG1 Meeting #93, Busan, Korea,* 21 May 2018
- *3GPP TS 38.213 V15.2.0,* June 2018
- Remaining issues on NR UL power control. *R1-1801546, 3GPP TSG RAN WG1 Meeting #92, Athens, Greece,* 26 February 2018
- Controlling the transmit power of UEs in for URLLC and eMBB data is described in 3GPP contribution "PUSCH reliability for URLLC. *R1-1806902, 3GPP TSG RAN WG1 Meeting #93, Busan, Korea,* 21 May 2018
- Multiplexing of URLLC and eMBB uplink channels. *R1-1804957, 3GPP TSG RAN WG1 Meeting #92bis, Sanya, China,* 16 April 2018